(19) Europäisches Patentamt
European Patent Office
Office européen des brevets

(11) **EP 3 074 662 B1**

(12) # EUROPEAN PATENT SPECIFICATION

(45) Date of publication and mention of the grant of the patent:
**22.07.2020 Bulletin 2020/30**

(51) Int Cl.:
**F16H 15/38** *(2006.01)*   **F16H 13/14** *(2006.01)*
**F02M 35/10** *(2006.01)*

(21) Application number: **14805605.4**

(22) Date of filing: **01.12.2014**

(86) International application number:
**PCT/EP2014/076152**

(87) International publication number:
**WO 2015/079070 (04.06.2015 Gazette 2015/22)**

(54) **SUPERCHARGER ARRANGEMENT**

VERDICHTER-EINRICHTUNG

AMÉNAGEMENT DE COMPRESSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2013 GB 201321150**
**16.05.2014 GB 201408772**

(43) Date of publication of application:
**05.10.2016 Bulletin 2016/40**

(73) Proprietor: **Allison Transmission, Inc.**
**Indianapolis, IN 46222 (US)**

(72) Inventors:
• **DUTSON, Brian**
**Manchester**
**Lancashire M29 7PT (GB)**

• **BURTT, David**
**Chorley**
**Lancashire PR7 5UJ (GB)**
• **FULLER, John**
**Preston**
**Lancashire PR2 1AD (GB)**

(74) Representative: **HGF**
**1 City Walk**
**Leeds LS11 9DX (GB)**

(56) References cited:
**WO-A1-2011/051702      WO-A1-2013/104727**
**WO-A1-2013/174825      WO-A2-2008/038043**
**GB-A- 2 438 412         US-A- 5 007 298**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This invention relates to a supercharging arrangement for an internal combustion engine comprising a supercharger having a rotational drive input a transmission having a rotational drive input to receive drive from an internal combustion engine, and a rotational drive output connected to the input of the supercharger wherein the transmission includes a variator operatively connected between the input and the output of the transmission.

In this context, a variator is a transmission component that interconnects two rotatable elements whereby, when rotating, the two elements have rotational speeds related to one another by a ratio (referred to as the "variator ratio") that can vary between a minimum variator ratio and a maximum variator ratio in a substantially stepless manner.

## Full toroidal variators

The range of variators known as toroidal variators fall into two principal categories: "half-toroidal" and "full-toroidal" variators, so termed because of the toroidal (or half-toroidal) cavity that exists between input and output working surfaces of the variator. In a full-toroidal variator, each rotatable element is connected to a respective race within the variator, such that each rotatable element is fixed for rotation with its race and such that the races rotate about a common axis (the "variator axis"). Each race has a working surface, arranged such that the working surfaces face one another in a direction parallel to the variator axis. An annular recess of arcuate cross-section is formed within each working surface, coaxial with the variator axis. The recesses are arranged such that they lie on a common hypothetical circle, the plane of which intersects the variator axis and the centre of which is in a plane (the "centre plane") that is parallel to and spaced equally between the working surfaces. By extending the hypothetical circle around the variator axis, a hypothetical torus is described, the working surfaces occupying opposite regions of the boundary of the torus. Therefore, the space between the working surfaces of the races is referred to as the "toroidal cavity". The radius of the centre of the hypothetical circle with respect to the variator axis is termed the "toroidal radius", and the radius of the hypothetical circle is termed the "minor radius of the toroid".

Typically, several rolling elements are provided within the toroidal cavity. Each rolling element has a rolling surface that makes contact with (subject to the discussion below) a respective working surface of the two races. Each rolling element is carried in a respective carriage such that it can rotate with respect to the carriage about a rolling axis upon which the rolling surface is centred.

Rotation of one of the races (called the "input race" in this discussion) with respect to the carriages causes each rolling element to rotate, and this, in turn causes a torque to be applied to the other race (called the "output race" in this discussion), in a direction opposite to the rotation of the input race. If the output race is allowed to rotate in response to the applied torque, it will do so in a direction opposite to that of the input race. During such rotation, each rolling element will make contact with the input race and the output race about a respective circular contact locus described on the respective working surfaces. If these two loci are of the same radius (the radius of a locus being generally referred to as the "contact radius"), then output race and the input race will have the same rotational speeds (albeit in opposite directions). However, if the contact radius of on the input race (the "input radius") is not equal to the contact radius on the output race (the "output radius"), then the speed of the output race will be greater than or lesser than the speed of the input race. In general, the variator ratio will be equal to the ratio of the input radius to the output radius.

Each carriage is configured such that the rolling axis can be moved to alter the input and the output radii, this movement being referred to as "tilt". At least when the variator is operating in an equilibrium condition, the input and the output radii are symmetrically disposed about the toroidal radius.

The foregoing description refers to contact between the working surfaces and the rolling elements. However, this is a simplification. Most embodiments of toroidal variators operate using traction drive. That is to say, the working surfaces and rolling elements are at least partially immersed in a traction fluid. This has the property of having a viscosity that increases rapidly when its pressure exceeds a threshold. As the races rotate, traction fluid is drawn into the nips formed between the rolling elements and the working surfaces to create a thin layer of traction fluid between the rolling surfaces and the working surfaces, so there is, literally speaking, no contact between them. In order to achieve a satisfactory traction drive, an end load is applied, which urges the races towards one another along the variator axis. The end-load is optimised to balance the requirement of providing sufficient loading to produce adequate traction at the interfaces between the working surfaces and the rolling surfaces, but low enough not to compromise the efficiency and durability of the variator. In many embodiments, the races may make slight movements along the variator axis in response to the end-load. Often end-load is applied using hydraulic pressure.

The size of the end load has an important effect on variator performance and longevity. Excessive end load reduces efficiency and causes premature wear, leading eventually to variator failure. Inadequate end load can lead to excessive -and even catastrophic -slip between the rolling elements and the races. The end load required to prevent excessive slip varies with the torques exerted upon the races. In principle a constant end load can be used, but this must be large enough to sustain traction when the variator is subject to the maximum expected torques, so that under all other conditions the end load is larger than is necessary. Improved efficiency and variator lifetime can be achieved by adjusting the end load in sympathy with the torques handled by the variator.

The traction coefficient of a variator is defined as the (i) tangential contact force divided by (ii) the normal contact force. These quantities are defined as follows:

(i) The tangential contact force (that is, parallel to the interface plane of the rolling element and race, and in the rolling direction of the rolling element) arises from fluid shear at the rolling element-race contact. It is proportional to a force applied to the rolling elements (termed the "reaction force"), and generally determines the sum of the absolute values of the variator input and output torques (this being referred to as "reaction torque"). The reaction force may typically be applied to the rolling element via, for instance, a rolling element control actuator.

(ii) The normal contact force (that is, the force normal to the rolling element-race interface plane) is generally determined by the endload that is applied to the variator, although, since the direction of the normal to the interface varies with the rolling element inclination, it is also a function of the cosine of the rolling element's angle to the variator axis. In the variator in which a single rolling element is disposed on a carriage between the races (a "single rolling element variator"), the race input and output torques generated by the rolling elements are of the same sense. Reaction torque may be described as the sum of the variator input and output torques, and is commonly used to describe the torque reacted into a casing of a variator in which the sign of input and output torque are the same.

Proportionality of end load to reaction torque is, with some provisos, a highly efficient mode of end load control in full toroidal variators since, for any given variator ratio, it provides a constant traction coefficient at the rolling element/race interface.

Control of end load based upon reaction torque is, with some provisos, the optimal strategy for a full toroidal variator and conventionally is achieved when hydraulically controlling the reaction torque (reaction forces in the rolling elements) of the variator and applying a common pressure to the endload system.

Within the general arrangement of a full-toroidal variator described above, a great many variations are possible concerning control, mounting and freedom-of-movement of the carriages, number and configuration of races, number and configuration of rolling elements, and so on.

In one modification to the variator described above, each rolling element is replaced by a train of two rolling elements in contact with one another (a "double rolling element variator"). Thus, each rolling element is in contact with one working surface and with the other rolling element. It should be noted that in a variator that incorporates this modification, both races turn in the same direction about the variator axis, so have a positive variator ratio and, since the torques acting on the input and output races are in an opposite sense to one another, the term reaction torque may be conveniently defined as the sum of the *absolute values* of input torque and output torque. In all following descriptions the term 'reaction torque' is used in the context of a single rolling element full toroidal variator, but it will be appreciated that the invention applies to other variators which feature input and output torques with opposite signs.

The use of the terms "input" and "output" to define the races should not be taken as a functional or structural limitation relating to these components - they are simply labels. The variator may be entirely symmetrical in operation. These will typically be chosen to provide a concise and understandable description in a particular context. For example, in the case of transmission for a vehicle, the input will typically be connected to a prime mover, and the output will typically be connected to a final drive system to indicate the normal direction of power flowing through the variator. However, it will be understood that when the vehicle is in an overrun condition, engine braking will actually cause power to flow from the output to the input of the variator.

In the remainder of this specification, the term "variator" will refer to a full-toroidal variator as described above, unless the context indicates otherwise. However, it will be understood that the invention is applicable to a wide range of rolling contact variators.

There are two main strategies used to control a variator: torque control and ratio control.

Torque control has no direct equivalent in multiple-speed transmissions because it relies upon a feature arising from the nature of a variator. Torque control has been described in many publications, including those parts of WO-A-2010/070341 that relate to Figures 1 to 3, and will be described here only briefly, as required to enable the present invention to be understood.

Torque control relies upon the variator having several design features:

• each carriage has freedom to rotate about a reaction axis that is inclined by a small angle to the centre plane; and
• each carriage can move axially along the reaction axis against a force applied to it by an actuator.

Note that the first of these requirements means that while under torque control, tilt angle is not controlled directly by an actuator.

Each race applies a force to each rolling element that acts in a direction tangential to the working surface. Therefore, equal and opposite tangential forces must be provided by each actuator to maintain the rolling axis of the corresponding rolling element stationary along the reaction axis. If the force applied by the actuator changes, the forces acting on the carriage become imbalanced, so the rolling axes will move. The geometry of the variator is configured (using considerations that will not be discussed here) such that upon movement along the reaction axis, a couple is generated about the reaction axis that causes the carriage to rotate. This changes the tilt angle, in such a way as to reduce the imbalance of forces acting on the carriage. The carriage will therefore move towards a new tilt angle at which the forces return to balance. Due to the geometry of the variator, the carriage assemblies move along their reaction axes and rotate about their tilt axes, such that they accommodate the ratio of the speeds of the input and the output races. Torque control requires the application of force to the rolling elements in the direction of travel along their reaction axes. Such actuation requires work to be done on the rollers, typically through hydraulic actuation. The energy expended reduces efficiency of the variator system, and introduces a requirement for heavy and costly hydraulic apparatus.

Ratio control bears the nearest similarity to the control of a transmission with multiple discrete, spaced ratios. In ratio control, a control system determines the variator ratio required to achieve a desired operating condition and operates actuators to move the carriages in such a way as to directly cause the rolling axes to tilt to the angle required to achieve the target ratio.

At any moment, the ratio of a variator is determined by its instantaneous tilt angle. Therefore, it might seem to be most straightforward to control the ratio by means of an actuator that applies a torque to a roller or its carriage to cause it to rotate about the tilt axis. However, in many cases, this is not an efficient way to control ratio. In order to cause the roller to tilt in this way, sufficient shear forces must be generated at the contacts between the rolling elements and the races to overcome the viscosity of the traction fluid, and then each contact has to be moved across the working surface of the race. Movement of a force through a distance requires work to be done. Therefore, to achieve such movement requires an actuator that can perform such work, and a source to power such an actuator. These components are typically both heavy and expensive.

An alternative approach to ratio control is therefore proposed, which will be referred to as "pitch steer" ratio change. WO2013/104727 describes a variator in which the rolling elements can be moved to cause rotation about a pitch axis. This causes them to tilt, thereby changing the transmission ratio.

Consider the motion of a rolling element and a race at their contact regions. The instantaneous movement of each of the rolling element and the race at the contact region can be described by respective velocity vectors. The angle between these two vectors is the steering angle, so termed because generation of such an angle causes the race to steer the rolling element towards a new ratio angle. The steering angle is generated by an input to the rolling element - a pitching input - that causes the rolling element to pivot about a pitch axis defined by a hypothetical line between the race-rolling contact regions.

The existence of the caster angle causes the steering angle to reduce as the tilt angle changes until it approaches zero. When this happens, the tilt angle, and therefore the variator ratio, stabilises at a new, steady value. During a change in ratio effected by pitch steer, the rolling elements are steered by the races, but do not translate along the working surfaces; there is never any appreciable difference between the local velocities of the rolling elements and races at the contact regions. This means that there is no appreciable work done to effect the change of ratio. Pitch steer control can therefore be achieved using low-powered actuators, which can be light in weight and inexpensive. In a variator configured for pitch steer control, the caster angle can be implemented using an actuation point that is offset from the toroidal mid-plane, or by mounting the roller on a gimbal such that the roller may rotate about its rolling axis but is constrained to precess about an axis inclined to the plane of the races. The gimbal caster pivot axis passes through the centre of the rolling element.

In a first aspect, the present invention provides a supercharging arrangement for an internal combustion engine comprising a supercharger having a rotational drive input a transmission having a rotational drive input to receive drive from an internal combustion engine, and a rotational drive output connected to the input of the supercharger, wherein the transmission includes a variator operatively connected between the input and the output of the transmission, the variator (typically a full-toroidal variator) comprising:

an input race and an output race each having a working surface, the races being coaxially mounted for rotation about a variator axis, and a toroidal cavity being defined between the working surfaces;

at least one rolling element disposed between the working surfaces, the or each rolling element having at least one rolling contact with one working surface and a second rolling contact, these two contacts defining a pitch axis, the or each rolling element being mounted on a carriage assembly for rotation about a rolling axis, the radius of the contact with the at least one working surface being variable with respect to the variator axis in accordance with the ratio of the variator, the or each rolling element being mounted for pivotal movement about the pitch axis;

a control member operative to actuate the or each rolling element to cause pivotal movement and thereby change the pitch angle, and thereby cause the carriage to pivot about a tilt axis to effect a change in variator ratio; and

a mechanical end-load clamping system which typically applies an axial end-load force to the rolling elements directly related to torque transmitted through the variator.

In a first arrangement, the second rolling contact of the or each rolling element is in contact with the other of the working surfaces. Alternatively, the second rolling contact of the or each rolling element is in contact with a second rolling element and the second contact of the second rolling element is in contact with the other of the working surfaces.

The or each rolling element may be in driving engagement with the working surfaces and/or a working surface and another rolling element, as the case may be, through a traction fluid which can resist shear forces when subject to a suitable pressure by the end-load.

The term "rolling element" is employed to denote an element by which drive is transmitted between the input race and the output race. In a preferred form, the or each rolling element is a roller having an axis of rotation generally perpendicular to a plane of the roller and which presents a rolling surface to the input race and the output race or to one race and another roller.

The end load clamping system may apply an axial end-load clamp force to the rolling elements directly related to the torque transmitted by the variator. The end-load clamping system may apply an end load that is determined only by the torque on the input race, or, only by the torque on the output race. Alternatively, the end-load clamping system may apply an end load that is determined by the torques on both races. In such embodiments, the end load may depend upon the sum of the torques on the races or on the greater of the input torque and the output torque.

The end-load system preferably comprises a biasing device, for example a cam arrangement which transmits torque through a link from one race or to both races.

Suitably, the link typically comprises low-friction rolling elements that lie on a circumferential ramp of the cam, so that the torque and axial end-load are related mathematically by the tangent of the ramp angle multiplied by the radius of the rolling elements according to the expression:

$$F_{el} = \frac{T}{\tan(\theta).R}$$

Where:

T is torque applied to a race,
$\theta$ is the local ramp angle of the cam, and
R is the radius of the rolling elements from the variator axis.

The input race may be operatively coupled to a variator input and the output race is suitably operatively coupled to a variator output. The end-load system may include one or more biasing device that couples of either or both of the input race and the output race respectively to either or both of the rotary variator input and the rotary variator output, the biasing device serving to transmit torque from one to the other and arranged to exert upon the race to which it is applied a biasing force which varies with torque acting on respectively, the variator input or output the input and or output biasing forces both being directed such as to urge the input and output races into engagement with the rolling elements to provide traction between them.

In one embodiment, one of the variator races is coupled to a connection shaft through a mechanical end load loading arrangement (which may also be known as a traction loading arrangement), which serves both to transmit torque between the connection shaft and the variator race, and to exert on the race an end load force which is a function of the torque transmitted, the end load force urging the variator races into engagement with the rolling elements to provide the traction needed for transfer of drive.

In a further embodiment, the mechanical end load clamping system comprises means for applying to one of the input race and the output race a first end load, proportional to the input torque applied to the variator by the variator input; and means for applying a second end load, proportional to the output torque of the variator, to the same race to which the first end load is applied. In this arrangement, the end load applied to the variator is proportional to the sum of the input and output torques and thus an accurate end load is provided mechanically, without the requirement for a high pressure hydraulic system.

In an especially preferred embodiment, the coupling of the input race to the rotary variator input is through a first biasing device which serves to transmit torque from one to the other and is arranged to exert upon the input race a first biasing force which varies with torque acting on the variator input, and in that coupling of the output race to the rotary variator output is through a second biasing device which serves to transmit torque from one to the other and is arranged to exert upon the output race a second biasing force which varies with the torque acting on the variator output, the first and second biasing forces both being directed such as to urge the input and output races into engagement with the rolling elements to provide traction between them, and acting in opposition so that at any moment one or other dominates and determines the net biasing force applied by the two biasing devices. This may be referred to as a "maximum wins" mechanical end load system. This system provides a ratio of end load to traction shear force that approximates to a constant traction coefficient, but advantageously is less mechanically complex than a system in which mechanical end load system is applied to both the input and output and the end load is based on the sum of the input and output torques.

Toroidal variators have a geometry whereby the rolling elements reside in a cavity whose width in the plane of the rolling element is conventionally equal to the diameter of the rolling element (plus the thickness of any layer of traction fluid). As the rolling element tilts with a change in variator ratio, the races that clamp the rolling element do not move in the axial direction by a substantial distance. Thus, the locus of the tilting rolling element describes a circle present in the toroidal section.

The arrangement by which the pitch axis passes through the contact regions ensures that rotation or a component of rotation about the pitch axis involves a rotational change relative to the race at the contact point but does not involve a significant change in the contact radius. Thus, it does not of itself cause a change in the variator ratio, and does causes negligible translational movement of the contact region across the working surface, thereby minimising the work that must be done in changing the pitch angle. This allows a change of variator ratio to be effected using a low actuation force, which requires an actuator of low power, and therefore low cost.

The or each rolling element may be mounted for rotation in a carriage assembly. Each carriage assembly may be mounted for pivotal movement about an axis passing through the centre of the respective rolling element and may optionally be actuated at an actuation point radially distant from the pitch axis such that displacement of the actuation point urges the carriage to pivot about the pitch axis. Each actuation point is preferably offset from the centre plane of the toroidal cavity in a direction parallel to the variator axis, in which case, the offset typically determines a castor axis about which the rolling element precesses, the angle between each rolling element and the plane of the associated working surface (or the disc on which the working surface resides) being termed the caster angle. Rotation of the rolling element about the castor axis is termed precession.

Each carriage assembly may be constrained to the said pivotal movement by i) coupling with the control member about an actuation point and ii) coupling about a second reaction point. The reaction point may act at a point that lies on an axis passing through the plane of the rolling element. Preferably the reaction point is at the centre of rotation of the rolling element.

Each rolling element and its respective carriage assembly may together have four points of contact, the points of contact being at the input working surface, the output working surface, an actuation point and a reaction point such that the rolling element is constrained in its position in the toroidal cavity but the rolling element is mounted for pivotal movement about the pitch axis and rotation about the precession axis, a component of the precession rotation being tilt, this providing a change in variator ratio. The control member may be adapted to provide actuation by translational movement.

The control member may actuate the carriage assembly at a location radially outward of a surface of a cylinder that is coaxial with the variator axis and tangential to the periphery of the larger of the input surface and output surface.

The respective carriage assemblies may each be actuated simultaneously. A variator may comprise an actuator for each respective carriage assembly. The variator may comprise a single control member on which the carriage assemblies are mounted.

A control assembly typically comprises a control member operatively coupled to a reaction member, the control member being movable, or having a component of movement in a plane perpendicular to the variator axis. The reaction member may comprise a plurality of arcuate slots each slot corresponding with a respective carriage wherein the carriage assembly comprises an engagement part for sliding engagement of the carriage assembly along its respective slot such that the rolling element is constrained to the said pivotal movement about the pitch axis. In some embodiments, each carriage assembly comprises a stem coupled to the control member.

Each carriage assembly is preferably mounted such that the precession axis of the rolling element is inclined to a plane perpendicular to the variator axis whereby the rolling element is free to rotate about said precession axis. The precession axis may be defined between the centre of the rolling element and a pivotal joint that is radially disposed from the axis of the rolling element, the pivotal joint being axially offset from the centre plane of the toroidal cavity and located either on the control member or on the reaction member. The carriage assembly may comprise a longitudinally extending carriage stem and a rolling element carrier upon which the rolling element is rotatably mounted, the carriage being rotatable about a longitudinal axis of the stem. Each rolling element may be mounted on its respective rolling element carrier by a pivoting joint whose axis passes through the centre of the rolling element, this pivoting joint defining some or all of the precession axis.

The reaction member may be movable radially of the variator axis and may optionally be movable in a non-radial direction such that equal and opposite steering angles are applied to the rolling elements when the roller reaction loads are unequal such that the reaction loads generated by each rolling element within the toroidal cavity become balanced or equalised. The control member may be operatively coupled to the plurality of rolling elements on the same side of a plane that includes the variator axis.

In one embodiment, the toroidal cavity contains two rolling elements. Preferred embodiments comprise a reaction member operatively coupled to the plurality of rolling elements such that it bears the reaction torque from the rolling elements within the toroidal cavity. In such embodiments, reaction torque is typically wholly or partially borne by the reaction member separately from the control member. The reaction member may pivotally be coupled to the centre of each rolling element. The reaction member may be coupled to the rolling element such that the carriage assembly is constrained to the said pivotal movement. In a preferred arrangement, the reaction member is movable radially of the variator axis and optionally is movable in a non-radial direction such that that the reaction member balances reaction loads generated by each rolling element within the toroidal cavity. A variator may further include a damper to dampen movement of the reaction member in a radial direction relative to the variator axis. The reaction member may comprise a mechanical end-stop to limit movement of the reaction member in a radial direction relative to the variator axis. The reaction member may be mounted for rotation about the variator axis in response to reaction torque arising from the race to rolling element contact thereby changing the variator ratio. For example, the reaction member may be mounted for rotation about the variator axis in response to a reaction torque above a pre-determined level. This may be achieved in a variator comprising resilient means against which the reaction member may be urged in response to a reaction torque.

The reaction member may be linked to resiliently deformable means. Upon a change in variator torque, the rolling elements or reaction member may move to react the load against the resiliently deformable means. The rolling elements may pitch thereby causing a change in ratio for example a downshift, in response to the increased variator torque. The resiliently deformable means may comprise springs, a rubber body or other deformable means. The resiliently deformable means may be installed with little or no pre-load so that the rolling elements are displaced due to the generation of any roller load (this being an alternative to their being displaced only above a certain threshold load). Thus, the variator exhibits a change in variator speed ratio in response to the torque applied to the variator and thereby provides some characteristics of a torque-controlled variator (whose ratio is also responsive to torque). Torque-controlled variators typically employ hydraulic apparatus which may be complex and costly. Accordingly, a variator having a reaction member and resiliently deformable advantageously and which provides characteristics of torque control may be employed in applications in which hydraulically controlled variators are typically employed, obviating the need for hydraulics.

In the absence of high pressure or complex hydraulic apparatus, it is beneficial to provide cooling to the variator such that the desired power capacity is obtained. Cooling is provided by a pump, preferably a low cost pump. The cooling pump is adapted to deliver cooling fluid to the variator rolling elements in order that power capacity of the variator is increased. The pump may be a low pressure pump such as an impellor or a geroter. It may run at an operating pressure of 5 bar or less. The pump may have a power of less than 50W or less than 30W, and it is driven by an electric motor.

Movement of each carriage about the pitch axis is preferably achieved by a single translational input to each carriage. Preferably there is a single translational input to all carriages within the toroidal cavity. Such translational input may be substantially perpendicular to the carriage reaction force. This optionally allows (i) the reaction force from the carriage to be borne effectively by the control or reaction member but without the member performing work on the rolling elements when the ratio is changed and (ii) also optionally enables the castor angle to be defined by an offset stem. Translational input may be achieved my means of an actuator, and preferably a single actuator for all rolling element carriages of the variator. A variator embodying the invention may comprise power means to actuate the control member having a power output of less than 20W, more preferably less than 10W, and yet more preferably less than 5W.

Embodiments of the invention may be extended to provide variators having multiple toroidal chambers. For example, a variator may further comprise: a second input surface and a second output surface defining a second toroidal cavity and a second carriage and rolling element set according to the first aspect of the invention disposed in the cavity;

> a control member operative to actuate the or each rolling element of the second cavity to cause pivotal movement and thereby change the pitch angle, and thereby cause the or each carriage of the second cavity to tilt to effect a change in variator ratio; and optionally a first reaction member operatively coupled to the plurality of rolling elements in the first cavity and a second reaction member operatively coupled to the second plurality of rolling elements in the second cavity such that the first and second reaction members bear reaction loads arising from the respective rolling elements; and a load-sharing assembly operatively linked to the reaction members of the first and second cavities such that reaction torque from the reaction members is balanced.

The variator is particularly useful in providing drive to an auxiliary unit. Any known auxiliary units may be driven by a drive arrangement comprising the present variator for example an energy storage and recovery system such as a kinetic energy recovery system, and a supercharger. The variator is especially beneficial in a drive arrangement system for a supercharger. Suitably drive is transmitted from an internal combustion engine to a supercharger through a drive system that includes a continuously-variable transmission comprising a variator. This supercharging arrangement according to the invention has particular application to passenger cars and light road vehicles. Use of the variator in a supercharger drive arrangement allows cost, complexity and weight to be kept to a minimum.

The invention provides a supercharging arrangement for an internal combustion engine comprising a supercharger having a rotational drive input a transmission having a rotational drive input to receive drive from an internal combustion engine, and a rotational drive output connected to the input of the supercharger wherein the transmission includes a variator operatively connected between the input and the output of the transmission.

The variator suitably has an output that is driven at an operating ratio from an input and control means operative to set the operating ratio of the variator. In one embodiment, the variator has a single-cavity having two rolling elements.

Suitably, the supercharging arrangement comprises a control system that operates to cause the engine to deliver an amount of torque that is indicated by the state of an input to the control system, and preferably comprises control means operative to set the operating ratio of the variator.

In another example, the disclosure provides a drive train for a vehicle comprising a transmission system that includes a vehicle transmission and a final drive unit; and a kinetic energy recovery system operatively coupled to the transmission system through a variator.

In one embodiment, the kinetic energy recovery system is operatively coupled to the transmission system between the vehicle transmission and a final drive unit of a vehicle. In another embodiment the kinetic energy recovery system is operatively coupled to the engine output or vehicle transmission input.

Suitably the transmission includes an epicyclic gearset. Preferably the epicyclic gearset is a traction drive epicyclic gearset. In a preferred embodiment, the epicyclic gearset shares traction fluid with the variator.

The supercharger may be of any known type. Preferably the supercharger is a centrifugal supercharger.

Embodiments of the invention will now be described in detail with reference to the accompanying drawings in which:

> Figure 1 is a perspective view of part of a variator I according to a first embodiment of the invention;
> Figure 2 is a control assembly of the part of the variator shown in Figure 1;
> Figure 3 is a top view of the part of the variator shown in Figure 1;
> Figure 4 is a side elevation of the part of the variator shown in Figure 1;
> Figures 5 and 6 are perspective and part cut-away views of part of a variator I according to a second embodiment of the invention including a reaction member;
> Figure 7 is a perspective view of part of a variator I according to a third embodiment of invention having twin cavities with a load sharing assembly for balancing reaction torque between the cavities;
> Figure 8 is a perspective view of a variator according to a fourth embodiment of the invention having twin cavities with three rollers per cavity and a load sharing assembly for balancing reaction torque between the cavities;
> Figures 9 and 10 are an axial view and a top elevation of the variator of Figure 8;
> Figure 11 is a perspective view of part of a variator according to a fifth embodiment of the invention including a reaction member and a torque sensing element;
> Figure 12 is a perspective view of the part of a variator shown in Figure 11 wherein torque is being reacted;
> Figure 13 shows a variator according to the invention in which the mechanical end load clamping system is applied to one race. This may be an input race or an output race and may be applied to any one of the variators illustrated in Figures 1 to 12;
> Figure 14 shows a variator according to the invention in which the mechanical end load clamping system is applied to an input race and an output race wherein the end load is based on the greater of the input torque and the output torque and may be applied to any one of the variators illustrated in Figures 1 to 12;
> Figure 14a shows a section through an alternative self-energising axial loading device according to one embodiment of the invention; and
> Figure 15 shows a variator according to the invention in which the mechanical end load clamping system is applied to an input race and an output race wherein the end load is based on the sum of the input torque and the output torque and may be applied to any one of the variators illustrated in Figures 1 to 12; and
> Figure 16 shows a variator according to the invention in which the mechanical end load clamping system is applied to an input race and an output race wherein the end load is based on the greater of the input torque and the output torque and is employed in a supercharger arrangement and may be applied to any one of the variators illustrated in Figures 1 to 12.

When reading the description of the embodiments, suitable attention should be given to the terminology, explanations and definitions set forth in the introductory part of this specification.

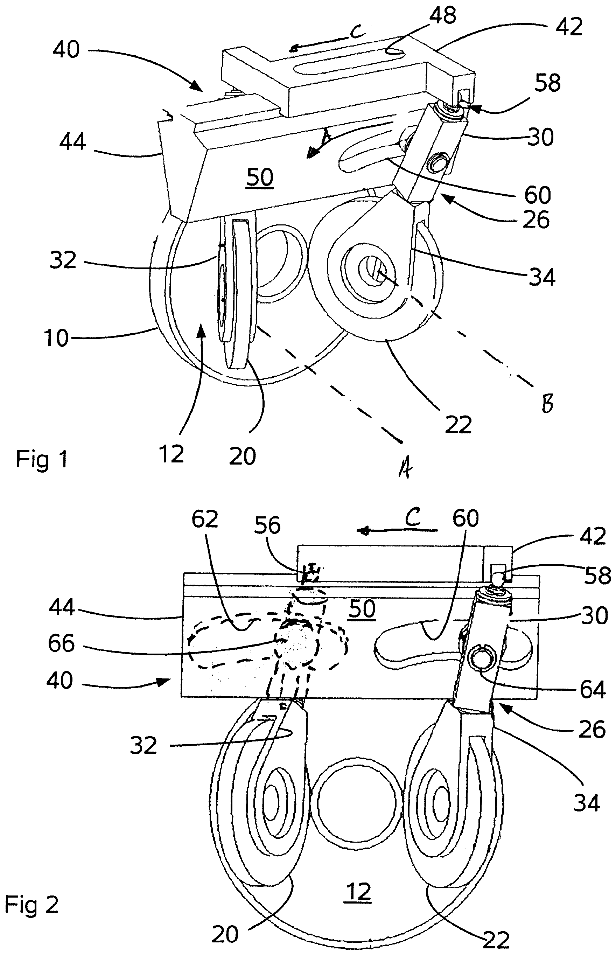

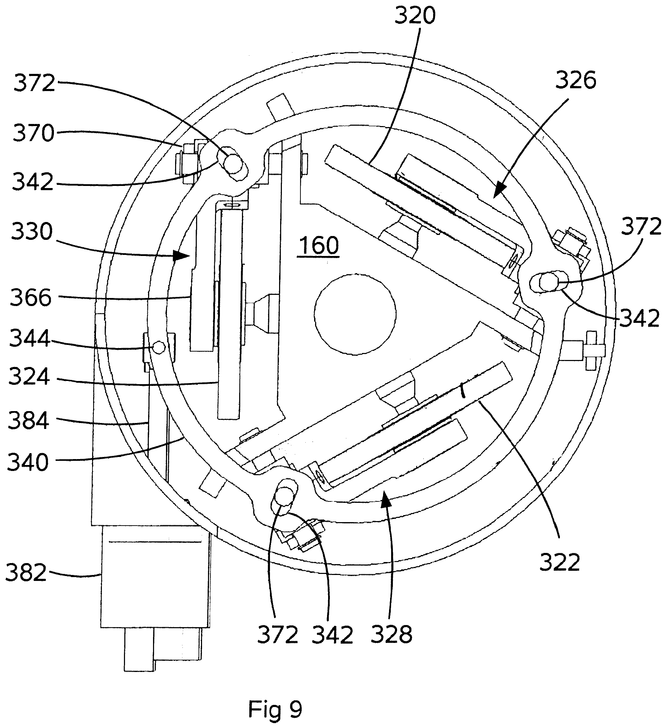

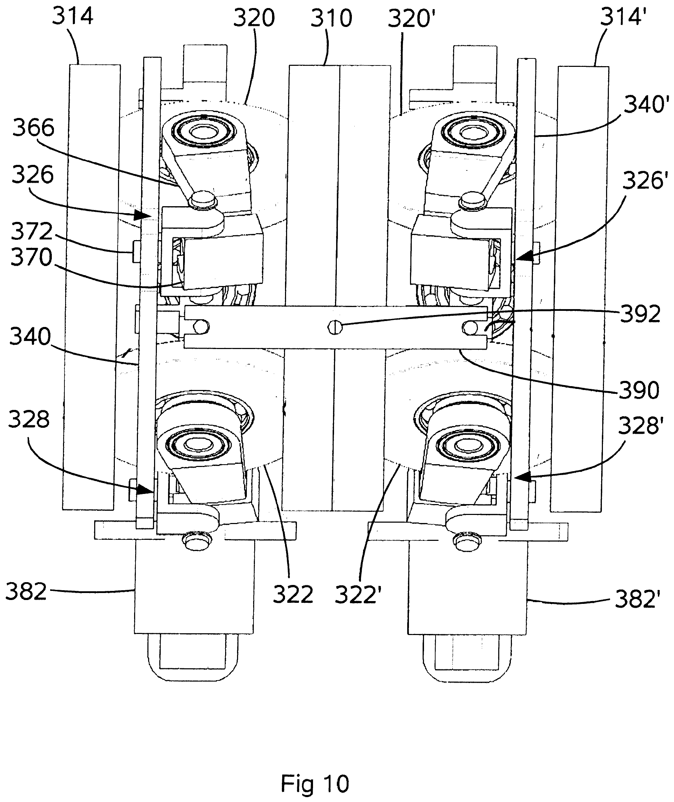

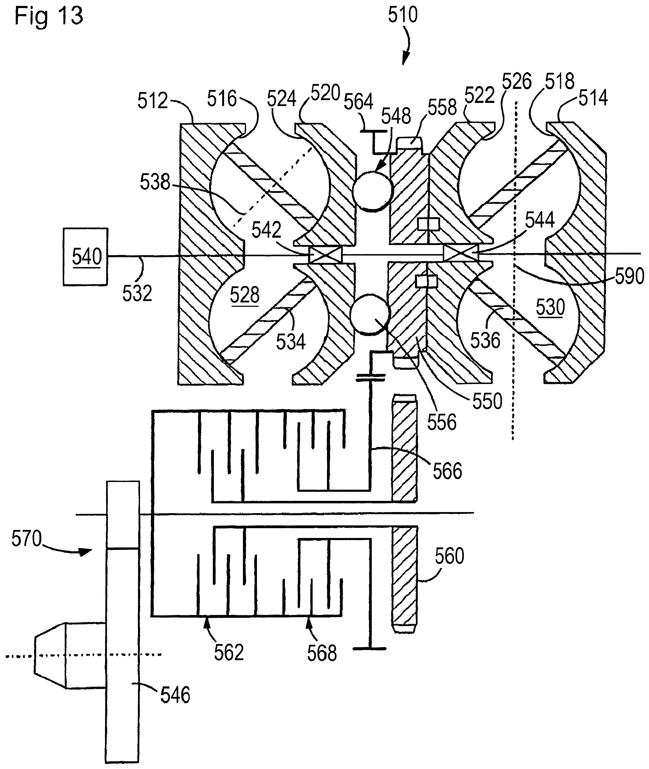

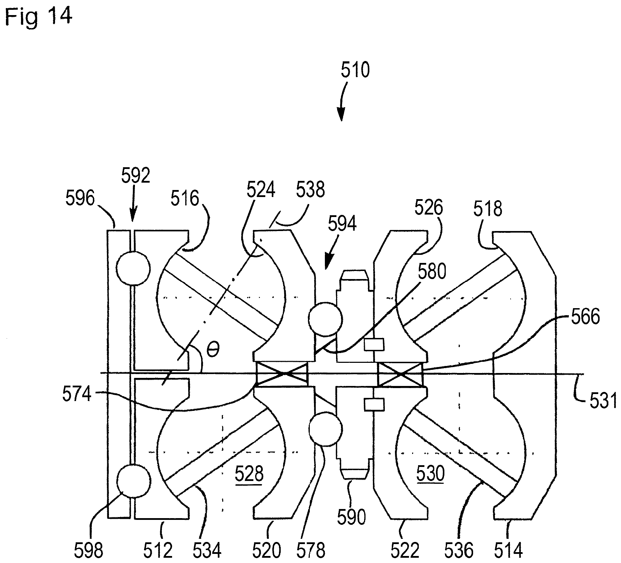

In Figures 1 to 12, the mechanical end load clamping mechanism which is part of the variator according to the invention is not shown for clarity of illustration. Each of these variators comprises mechanical end load clamping system, in particular in any one of the preferred embodiments of the mechanical end load clamping system as described herein and any of the specific embodiments illustrated in Figures 13 to 16, preferably that of Figure 14,15 or 16.

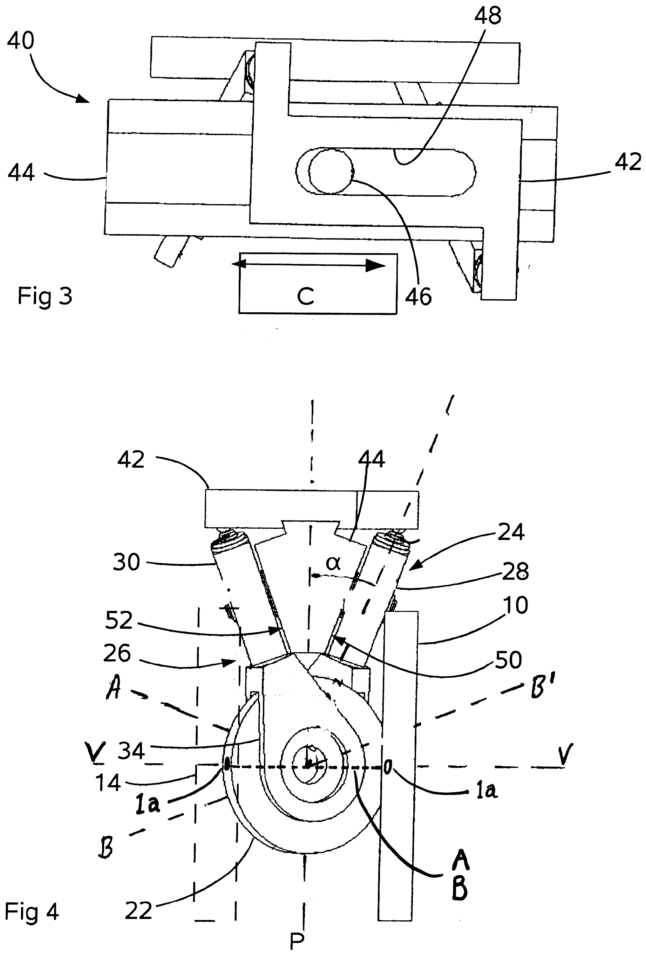

Figures 1 to 4 show different views of a part of a variator according to the invention. The variator comprises an input race 10, shaped generally as an annulus. The input race 10 has an inner surface within which annular recess 12 of arcuate cross-section is formed to provide a working surface of the input race 10. The variator further comprises an output race 14, shown in dotted lines only in Figure 4 that is substantially similar to the input race 10. The input race 10 and the output race 14 are disposed coaxially on a variator axis V, with their working surfaces facing one another, thus forming a toroidal cavity between the races 10, 14 that is bounded by their working surfaces. Each of the races 10, 14 is mounted for rotation about the variator axis V.

Rolling elements, in this case in the form of approximately cylindrical rollers 20, 22 with suitably profiled outer rolling surfaces are disposed for operation within the toroidal cavity. In this embodiment, there are two such rollers, but it will be understood that a greater number could alternatively be provided.

Each roller 20, 22 is mounted on a respective roller carriage assembly 24, 26. Each roller carriage assembly 24, 26 includes a stem 28, 30 and a fork 32, 34. Each fork 32, 34 carries a respective roller 20, 22 such that the roller 20, 22 can rotate on a bearing for rotation about a rolling axis that extends through its centre. Within each roller assembly 24, 26, each fork 32, 34 can rotate on its stem 28, 30 about a respective precession axis that is normal to its rolling axis.

Each carriage assembly 24, 26 is mounted such that the precession axis of the stems 28, 30 is inclined to a plane P at an angle "$\alpha$" known as the castor angle as shown in Figure 4. The plane P is perpendicular to the variator axis. Each roller 20, 22 is free to pivot about the respective precession axis, being the longitudinal axis of the stem 28, 30, which passes through the centre of the roller 20, 22 - that is to say, the castor angle is the angle between the precession axis and the centre plane of the variator.

The input race 10 is driven by and transmits drive to the output race 14 through the rollers 20, 22 which are in driving engagement between the races. An end load is applied to urge the races 10, 14 towards one another, thereby clamping the rolling elements with a force sufficient to transmit drive between the races and the rollers through the traction fluid.

In this embodiment, the precession angle, and therefore the tilt angle and the variator ratio is controlled using the mechanism of "pitch steer", as described above and disclosed in GB-A-2 499 704 and other applications of the present applicant.

The variator includes a control assembly 40 which comprises a slider 42 carried on a support 44. The slider 42 is adapted for reciprocal linear movement relative to the fixed part 44. A peg 46 projects from the support 44 through a slot 48 in the slider 42 such that it acts as a stop to limit the range of movement of the slider 42 on the support. The control assembly 40 is adapted to provide actuation of the variator by translational movement. The slider 42 is able to travel back and forth along the support 44 in a direction indicated by arrow C, along an axis in a plane perpendicular to the variator axis. In this embodiment, the slider 42 is coupled to each roller carriage assembly 24, 26 at a location radially outward of a cylindrical plane which is parallel to the variator axis V and tangential to the periphery of the larger of the input race 10 and output race 14. In an alternative embodiment, the carriage assemblies 24, 26 may each be actuated by their own actuator. The support 44 has guiding surfaces 50, 52. These may be inclined at an angle, for example

the castor angle $\alpha$, to the centre plane of the variator perpendicular to the variator axis V. In the embodiment that includes a gimbal on which the roller is mounted, the angle $\alpha$ may be zero because the castor angle is provided by the pivot in the gimbal.

The control assembly 40 is operatively coupled to the carriage assemblies 24, 26 by actuation joints 56, 58. The actuation joints 56, 58 constrain upper end parts of each stem 28, 30 to move linearly with the slider 42 while allowing the stems 28, 30 to pivot with respect to the slider 42. The single control assembly 40 controls both carriage assemblies 24, 26 in unison. The carriage assemblies 24, 26 are also coupled to the control assembly 40 at respective reaction points. Each reaction point comprises an arcuate slot 60, 62 that extends into a respective guide that also serves as a reaction surface 50, 52 of the support 44. The stem 28, 30 of each of the carriage assemblies 24, 26 carries a projecting reaction pin 64, 66 that extends into a respective arcuate slot, in which it is a close sliding fit with sufficient to allow free sliding engagement of each reaction pin 64, 66 in its slot 60, 62. The stem may be equipped with rollers to provide smooth engagement and a rolling engagement with the slot.

(In an alternative embodiment, the arcuate slots may be arranged perpendicular to the stems 28, 30 with the stem passing through the slot and forming the engaging part which cooperates with the slot to locate the roller carriage. Such an arrangement may include gimbals on which the roller are rotatably mounted).

Each roller 20, 22 and its carriage assembly 24, 26 together have four points of contact with the variator: contact between the roller 20, 22 at the working surface of the input race, with the working surface of the output race 14, with the control assembly 40 at the actuation joint 56, 58, and with the reaction point through the reaction pin 64, 66 and its respective slot 60, 62. Each carriage assembly 24, 26 is located within the toroidal cavity by the two points of contact with the control assembly 40 and by the contacts 1a between the roller and the working surfaces of the input and output races. These points of contact 1a mean that the carriage assemblies 24, 26 are mounted such that they are able to move to vary a pitch angle about a respective pitch axis A, B to cause pivoting of the roller about the pitch axis. These axes A and B pass through the contact regions 1a between each roller and its contact with each race. The carriage assembly 24, 26 is actuated through the actuation joint 56, 58, situated radially distant from the roller pitch axis. The roller carriages 24, 26 are constrained to the pivotal movement by the coupling of the reaction pins 64, 66 in their slots 60, 62, and by the freedom of rotation of the roller about its stem. The arrangement allows reaction forces from the rollers 20, 22 to be borne.

The pivoting motion of the carriage assemblies that occurs as the slider 42 moves, imparts to the rollers 20, 22 a component of rotation about their pitch axis A, B. The pivoting motion causes each roller 20, 22 to be steered (that is, to vary their precession) such that their tilt angle changes, this changing the speed ratio of the variator.

In another embodiment, each carriage assembly comprises a stem alone with the rollers being mounted on the end of the stem through a gimbal. In this arrangement each roller 20, 22 is mounted on its respective carriage assembly by a pivoting joint whose axis passes through the roller centre such that the roller is free to rotate about its precession axis. The stem suitably lies in the centre plane P of the variator and the gimbal arrangement provides the castor angle and degrees of freedom for the roller 20, 22 to freely precess.

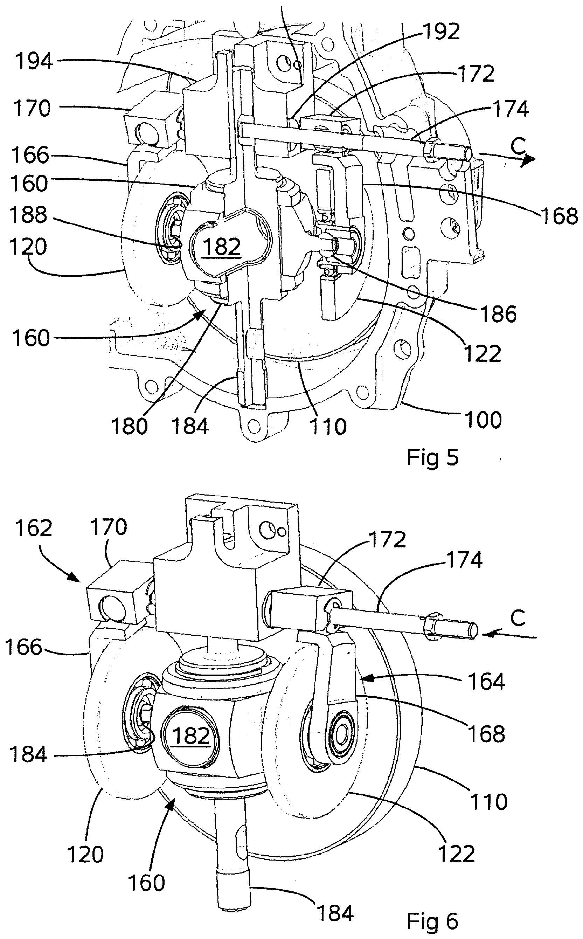

Figures 5 and 6 illustrate part of a variator that includes a reaction member 160 operatively coupled to the rollers 120, 122 that transmit drive between the input race 110 and the output race (not shown). The purpose of the reaction member is to bear reaction torque from the rollers 120, 122. The rollers 120, 122 are mounted on carriage assemblies 162, 164. Each carriage assembly comprises a carrier 166, 168 and a mounting part 170, 172. Each roller 120, 122 is carried for rotation about its axis on a respective carrier 166, 168. Each carrier 166, 168 is pivotally connected to the respective mounting part 170, 172.

Each mounting part 170, 172 is carried on an elongate control member 174, such that it is prevented from linear movement along the control member 174. The control member 174 may move in a linear, reciprocal manner in direction C, causing the mounting parts 170, 172 also to move in direction C. Each carriage assembly is located within the toroidal cavity by the connection between the mounting parts 170, 172 and the control member 174, and by a reaction point at the centre of the roller 120, 122. This reaction point is coupled to the reaction member 160. In this embodiment reaction torque is borne by the reaction member 160.

The reaction member 160 comprises a body 180 having an aperture 182 through which a variator input shaft and/or output shaft may pass. Reaction shafts 184, 190 project coaxially and in opposite directions from the body 180 and are aligned normal to the variator axis within the centre plane of the variator. End portions of each reaction shaft 184, 190 are retained in guides formed, respectively, in a casing 100 of the variator and a mounting block 194 secured to the casing 100. The reaction shafts 184, 190 move radially of the variator for the balancing or equalisation of roller reaction loads.

The reaction member 160 is operatively linked to the centre of each roller 120, 122 by a spherical joint 186, 188 so as to transmit the reaction force from the rollers 120, 122 to the reaction member 160 and to allow for relative pivotal movement between the rollers 120, 122 and the reaction member 160. The control member 174 passes through the reaction member 160 at an aperture 192 but is not linked to it. There is suitably sufficient clearance between the control member 174 and the aperture 192 to avoid fouling as the control member 174 moves in direction C, and as the reaction member moves radially of the variator axis.

The reaction member 160 is movable radially of the variator axis and may be moved in a non-radial direction such that that the reaction member 160 balances reaction loads generated by each roller 120, 122 within the toroidal cavity.

The reaction member 160 may include a damper to dampen movement of the body 180 for example in a radial direction relative to the variator axis. A mechanical end stop may be provided to limit movement of the reaction member 160 in a radial direction relative to the variator axis.

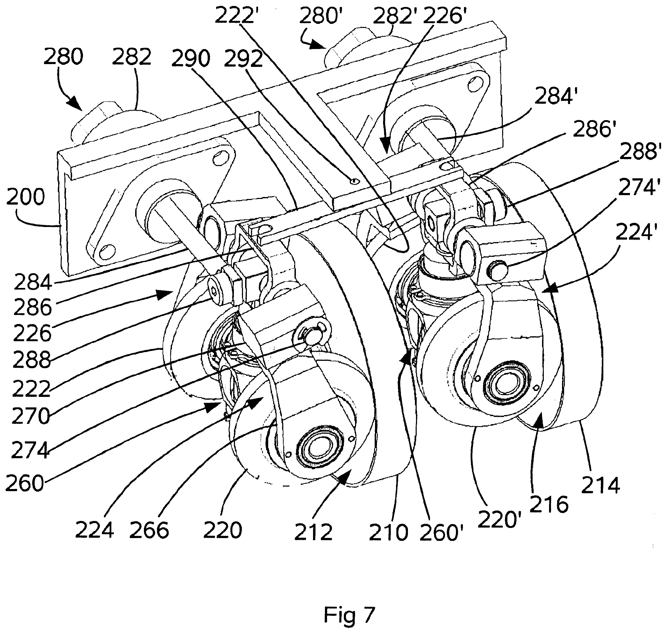

Figure 7 shows a part of a twin-cavity variator according to the invention. The variator comprises an input race 210 and similar first and second output races 214 (only one is shown) disposed, in the direction of the variator axis, to opposite sides of the input race 210. Each output race 214 has a working surface 216 that faces the input race 210. The input race 210 has first and second working surfaces 212 that face, respectively, the first and second output races 214. Therefore, two toroidal cavities are defined, a first between the input race 210 and the first output race 214, and a second between the input race 210 and the second output race.

A first set of rollers 220, 222 is provided within the first toroidal cavity to transmit drive between the input race 210 and the first output race, and a second set of rollers 220', 222' is provided within the second toroidal cavity to transmit drive between the input race 210 and the second output race 214. Each roller 220, 222; 220', 222' is mounted on a respective carriage assembly 224, 226; 224' 226'. Each carriage assembly comprises a carrier 266 and a mounting part 270. The roller 220 is mounted for rotation on the carrier 266. The carrier is connected to the mounting part 270 such that it is free to undergo a precessing motion to change the tilt angle of the rollers 220, 222; 220', 222' and thereby change the variator ratio. The respective carriage assemblies 224, 226; 224' 226' are mounted for pivotal movement about a pitch axis that passes through the centre of the respective roller and the respective contact regions of each roller.

A respective stepper motor actuator 280, 280' is associated with each cavity. Each actuator 280, 280' comprises a body 282, 282' that is fixed to a casing 200 of the variator, and an actuator rod 284, 284' that can be driven linearly into or out of the body by suitable control of the motor 280. The motor 280 may alternatively be a motor with linear lead screw.

Within each cavity, the mounting parts 270 of the two carriage assemblies are 224, 226; 224' 226' are connected to a common control rod 274, 274', such that they are fixed to the control rod against linear movement, but can pivot with respect to it. Each control rod 274, 274' is connected to a respective actuator rod 284, 284' through joint 288, 288' that admits pivotal movement between the control rod and the actuator rod. Thus, operation of the actuators 284, 284' causes linear movement of the control rods 274, 274', and therefore linear movement of the carriage assemblies 224, 226; 224' 226', but the reaction members 260, 260' are also allowed to rotate about the variator axis.

Each cavity has a reaction member 260, 260' to which the rollers 220, 222; 220', 222' are operatively coupled by spherical joints such that the reaction members bear reaction loads arising from the respective rollers, substantially similar to the arrangement of the preceding embodiment. Each reaction member 260, 260' has a reaction shaft that is secured by a yoke 286, 286' that has apertures through which the control rods 274, 274' pass. The yokes 286, 286' each communicate with a balance bar 290, the rotatable reaction members 260, 260' allowing reaction torques of the two cavities to be balanced or equalised.

The reaction members 260, 260' are operatively linked by a load-sharing assembly. The load-sharing assembly comprises a bar 290 mounted to the casing 286 by a pivot 292. The bar 290 is pivotally connected to the yokes 286, 286' symmetrically about the pivot 292. Therefore, an equal and opposite force is applied to each reaction member through its yoke, which ensures that an equal reaction torque is applied to the rollers 220, 222; 220', 222' in the two toroidal cavities.

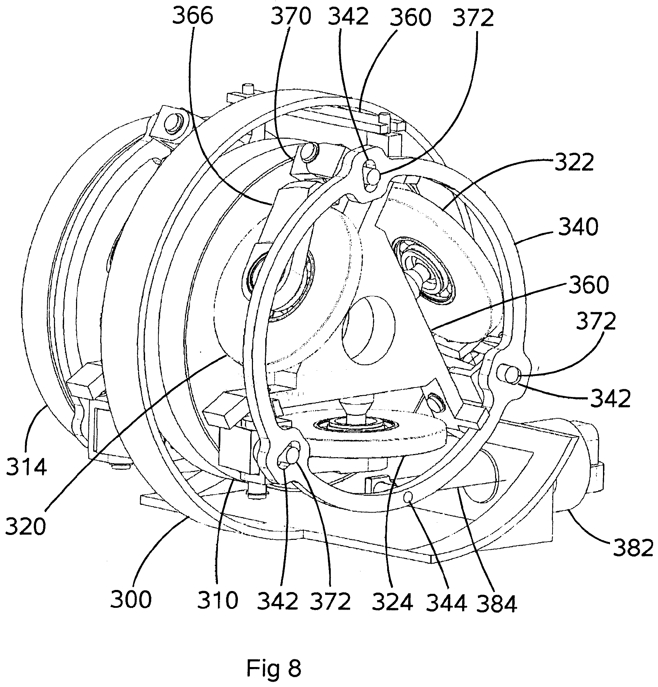

Figures 8 to 10 illustrate another embodiment of the invention. The variator comprises an input race 310 and similar first and second output races 314 (only one is shown) disposed, in the direction of the variator axis, to opposite sides of the input race 310. Within each of the two toroidal cavities defined by the races, there are three rollers 320, 322, 324; 320', 322' (one of which is not shown in the drawings).

The variator comprises a reaction member 360, 360' in each cavity. The reaction members 360, 360' are coupled to one another by a load balancing assembly that includes a bar 390 pivotally mounted on a casing 300 of the variator, each reaction member 360 being pivotally connected to the bar 390 symmetrically about its pivot 392.

Each roller 320, 322, 324; 320', 322 is carried for rotation by a respective carriage assembly 326, 328, 330; 326' 328' (one of which is not shown in the drawings). Each roller carriage assembly 320, 322, 324; 320', 322 comprises a carrier 366 and a mounting part 370. The roller 320 is mounted for rotation on the carrier 366. The carrier 366 is connected to the mounting part 370 such that it is free to undergo a precession motion to change the tilt angle of the rollers 320, 322, 324; 320', 322 and thereby change the variator ratio. A control peg 372 projects from each mounting part.

An annular control member 340, 340' is provided in each cavity. Each control member 340, 340' has three radial slots 342 into each of which one of the control pegs 372 is received. The variator further includes a stepper motor actuator associated with each cavity. Each actuator comprises a cylinder 382, 382' that is fixed to a casing 300 of the variator, and an actuator rod 384 (only one of which can be seen in the drawings) that can be driven linearly by suitable control of the actuator. Each actuator rod 384 is connected to a respective control member 340, 340' by a pivot 344, 344'. By this arrangement, operation of the actuator causes the control members 340, 340' to rotate, which, in turn, causes movement of the control pegs 370, and thus rotation of the carriers 366 on their respective mounting parts 370, and thus pivoting of each roller 320, 322, 324; 320', 322 about their respective pitch axis.

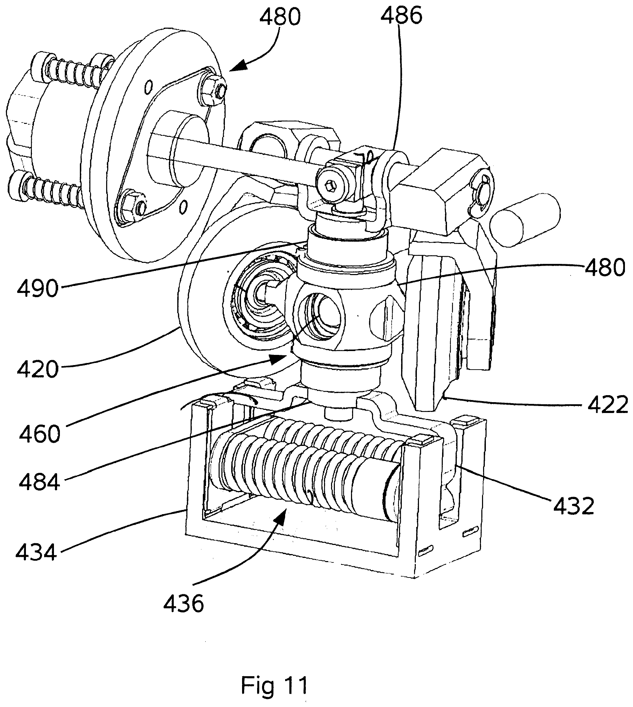

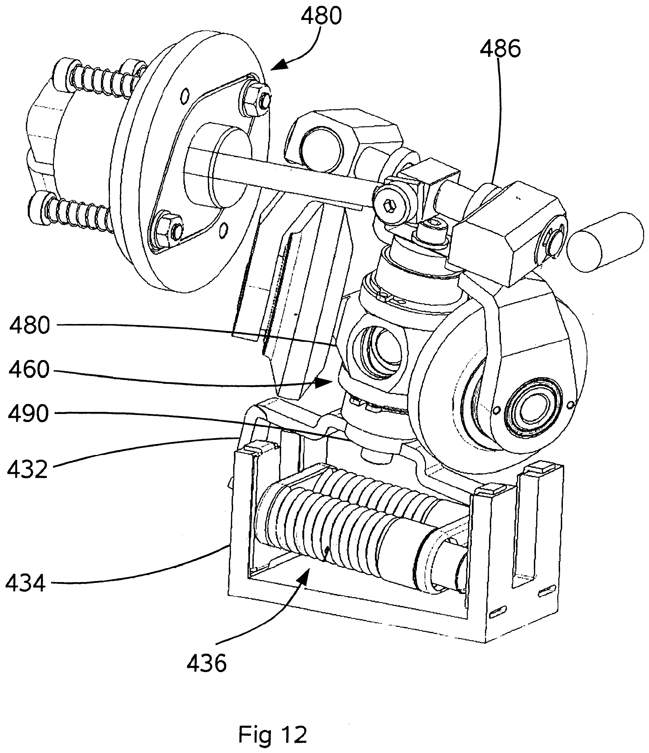

In Figures 11 and 12 the reaction member 460 is mounted for rotation about the variator axis in response to a reaction torque above a pre-determined level. The reaction member 460 comprises a body 480 having an aperture 482 through which a variator input shaft and/or output shaft may pass. The reaction shaft 490 projects coaxially from the body 480 and is aligned normal to the variator axis within the centre plane of the variator. The reaction shaft 490 is linked to a resilient mounting assembly 430.

In this embodiment, the resilient mounting assembly 430 includes a support bar 432 to which the reaction shaft 490 is connected and a cradle 434 that is connected to a casing of the variator, and which houses pre-loaded springs 436. The support bar 432 is normally retained in the cradle by the compressed springs 436. The reaction shaft 490 applies a torque reaction force via the support bar 432 to the springs when reaction torque is generated by the rollers 420 in the toroidal cavity. Rotation of reaction member 460 displaces transmission the reaction shaft 490 which displaces the support bar 432 against the springs 436 held in the cradle 434. The springs 436 may be set to deflect when the force applied exceeds a certain threshold. Rotation of the reaction member 460 causes the rollers 420 to be pitched and displaced such that the variator ratio is changed. Thus generation of excess reaction torque causes the variator to downshift, thus acting to reduce the reaction torque, thereby operating to limit the torque passing through the variator.

It will be seen that in each of these embodiments, actuation of the variator to cause the rolling elements to pitch takes place substantially or entirely radially outwardly of the rolling elements with respect to the variator axis. Thus, components that are responsible for performing actuation have minimal or no intrusion into the space between the rolling elements. In each of these embodiments, actuation of the variator causes the rolling elements to pitch takes place in a space that does not extend beyond the races in a direction parallel to the variator axis. In many cases, when the variator is used as part of a larger transmission system, there is little or no available space beyond the races in the direction of the variator axis within which components can be packaged. In addition, in each embodiment, the axis about which the pitching rotation occurs is not coincident with a physical component such as a shaft and an axis - instead, it is defined by the constraints imposed upon the motion of the carriers by components (such as the actuation point and the reaction point) that are remote from the pitch axis.

The variator 510 represented in Figure 13 is of twin cavity, full toroidal type and has a rolling element control mechanism (not shown) as described herein or as in any one of the variators illustrated in Figures 1 to 12. It has first and second input races 512,514 having respective working surfaces 516, 518 which are semi-toroidally recessed. Between the input races are first and second output races 520, 522, and these too have respective semi-toroidally recessed working surfaces 524, 526, so that between the first input and output races, 512 is 520 is formed a first toroidal cavity 528, and between the second input and output races 522, 514 is formed a second toroidal cavity 530. The races have a common rotational axis defined by a main shaft schematically indicated at 532 about which they rotate.

Each cavity 528, 530 contains a respective set of rollers 534, 536. Each roller is mounted for rotation about a rolling axis such as 538 and runs upon the toroidal faces of its associated input and output races to transfer drive from one to the other. The main shaft 532 serves as the rotary input to the variator, and is coupled (either directly or through intermediate gearing, not shown) to a rotary driver such as an engine, which in this particular embodiment takes the form of an internal combustion engine schematically represented at 540. The invention could equally well be implemented using a different type of rotary driver such as an electric motor, an external combustion engine etc. The input races 512, 514 of the variator are secured to the main shaft 532 so that they rotate along with it, and so are driven by the engine 540. The output races 520, 522 are able to rotate relative to the main shaft 540. In the illustrated embodiment this is provided for by means of roller bearings 542, 544 through which the output races are respectively mounted upon the main shaft 532. Drive is transmitted from the input races 512, 514 to the output races 520, 522 (or *vice versa*, in an "over-run" condition) through the rollers 534, 536 at variable drive ratio. The output races 520, 522 are able to be operatively coupled to a final drive 546 leading to the vehicle wheels.

In the illustrated variator 510 traction load is provided by means of a mechanical (nonhydraulic) traction loading device 548 which serves to bias the variator races 512, 514, 520, 522 into engagement with the variator rollers 534, 536 with a force (the "traction load") which is proportional to the output torque of the variator. It does so by urging the two innermost races (which in the illustrated embodiment are the output races 520, 522) away from each other. The traction load is transmitted through the rollers 534, 536 to the outermost races, which in the present embodiment are the input races 512, 514, and these in turn refer the force to the main shaft 532, which is thus placed in tension. By referring the traction load to the main shaft 532 in this way, any need for thrust bearings to withstand the traction load is avoided.

The traction loading device 548 uses a simple ramp arrangement to transmit the output torque, and this ramp arrangement creates a traction load along the axial direction which is a function of (and more specifically, in the present embodiment, proportional to) the torque transmitted.

The variator 510 represented in Figure 14 is of twin cavity, full toroidal type and has a rolling element control mechanism (not shown) as described herein or as in any one of the variators illustrated in Figures 1 to 12, and represents a preferred embodiment since the performance of the variator system will closely approximate a hydraulically controlled variator, albeit with lower cost and complexity.

The variator has first and second input races 512, 514 having working surfaces 516, 518 which are semi-toroidally recessed. Between the input races are first and second output races 520, 522 and these too have semi-toroidally recessed working surfaces 524, 526, so that between the first input and output races 512, 520 is formed a first toroidal cavity 528, and between the second input and output races 514, 522 is formed a second toroidal cavity 530. The races have a common axis defined by a main shaft 531 and are rotatable about it.

Each cavity 528, 530 contains a set of rollers 534, 536. Each roller is mounted for rotation about a rolling axis such as 538, and runs upon the semi-toroidal working surfaces of the adjacent input and output races, to transfer drive from one to the other. The main shaft 531 of the variator serves as its rotary input, and would typically be drivably coupled to a rotary driver such as an engine (not shown). A gear 590, co-axial with and secured to the second output race 522, serves as the variator's rotary output and in a complete transmission would typically be coupled through a chain running upon the gear 590 and through further gearing to a point of power usage, such as the driven wheels of a motor vehicle.

The end load needed to provide traction between the races 512, 514, 520, 522 and the rollers 534, 536 is created by first and second biasing devices 592, 594, whose construction and function will now be explained.

Note first of all that the second input race 514 is fixed upon the main shaft 531 and so rotates along with it. However the first input race 512 is capable of rotational and axial movement relative to the main shaft 531. Torque applied to the main shaft 531 is referred to the first input race 512 through the first biasing device 592. In the present exemplary embodiment it is formed by (a) a torsion plate 546 which is immovably fixed upon the main shaft 531, (b) the rear face 545 of the input race 512, and (c) a set of balls 596 interposed between the torsion plate and the race. The rear face 545 of the input race 512 has a set of circumferentially extending recesses forming ramp surfaces 550. Each ramp surface 550 can be described as having two helical regions or ramps of opposite pitch. The torsion plate 596 has a complementary set of circumferentially extending recesses forming ramp surfaces 552 which are part-circular when viewed in radial section and each of which is of shallow "V" form, to provide two oppositely pitched ramps 554, 556.

The biasing device 542 applies an axial force to the first input race 512 which is a function of the torque applied to the race (i.e. to the input variator input torque). To appreciate this, consider that when no torque is applied, the input race 512 is able to adopt a position in which the deepest regions of the recesses forming the ramp surfaces 550, 552 are aligned, the balls 548 lying in these regions, to minimise separation of the race 512 and torsion plate 546. If a torque is applied to the main shaft 531, this is directly transmitted to the torsion disc 546, but it is only transmitted to the input race 512 through the balls 548.

The race 512 is thus caused to rotate through a small angle relative to the torsion disc 546. Hence the balls 548 ride up the ramp surfaces 550, 552, urging the input race 512 toward the other races to provide end load. Due to the inclination of the ramp surfaces to the radial plane, the contact force between each of the balls and the first input race 512 has a circumferential component -i.e. a torque -and in this way the input torque is referred to the input race. It will be apparent that the force applied by the biasing device 542 is related to the input torque. The precise relationship depends on the shapes chosen for the recesses, but in the present embodiment, the force is substantially proportional to the input torque. Note also that by virtue of the "V" section of the recesses, input torque in either rotational direction (clockwise or anti-clockwise) creates a force in the same axial direction, contributing to the end load.

To keep the balls 598 properly located relative to each other, a registration disc is positioned between the torsion disc 596 and the first input race 512, receiving the balls in respective through-going holes 562.

To now explain the operation of the second biasing device 594, it should firstly be noted that the output races 520, 522 upon which the device acts are mounted upon the main shaft 531 through respective bearings 574, 576 carried upon the main shaft 531, and rotate in the opposite direction to the main shaft. They are also capable of at least some rotational motion relative to each other, and of relative axial motion. The second biasing device serves to urge the two races axially away from each other with a force which is a function of the output torque of the variator. It comprises balls 578 received in recesses in opposed faces of the first output race 520 and the output gear 590. These recesses are part-circular when viewed in a radial plane and form ramp surfaces of shallow "V" shape (not seen in the drawings) similar to those found in the first biasing device 592. Variator output torque acting upon the gear 590 is directly referred to the second output race 522, to which the gear is attached, but is transmitted to the first output race 520 through the second biasing device, which operates in like manner to the first biasing device 592 to urge the two output races apart.

No thrust bearing is needed to withstand the forces applied by the first and second biasing devices 592, 594 because they are instead referred through the torsion disc 596 and the second input race 514 to the main shaft 531, which is thus in tension. Because the first and second biasing devices work in opposition, the actual end load they create is not the sum of their contributions. Instead, at any given moment one force overcomes the other and their combined contribution is equal to the larger of the two. Hence at some times end load is varied in dependence upon variator input torque. At other times end load is varied in dependence upon output torque. Which mode of control prevails depends upon the relative magnitudes of the input and the output torques. By appropriate design of the ramp surfaces - in particular by selection of their inclinations and their circumferential positions-the conditions in which one or other prevails can be selected.

An optional spring 580 sandwiched between the output races 520, 522 provides an additional contribution to the end load. It is formed as a Belleville washer: a conical, resiliently deformable disc which urges the two output races away from each other and so creates an end load even when the variator is subject to no torque. This provides a pre-loading function to prevent slip when torques on the variator input and output are very low. It can also provide a desirable contribution to the end load, which while the output torque dominates is added to the contribution made by the second biasing device 594 and can help to better approximate the desired end load characteristic. A further spring may be placed between the first input race 512 and the torsion disc 596, to provide a similar contribution when it is the input torque that dominates. A spring may alternatively or additional be placed in series with the biasing devices, for example between torsion disc 596 and the main shaft 531, so that the spring may dominate over the two biasing devices when there is no torque transmitted by the variator.

Figure 14a shows a sectional view of a single ball and ramp biasing device, as may be applied in Figures 13, 14, 15 and 16. A race 110 and a torsion disc 140 trap ball bearings 136 between them and clamp the rolling elements (not shown) with an end load that is proportional to the torque transmitted by the device. This arrangement is adapted for bidirectional torque transfer, featuring 'V' ramp formations 138 and 139 that extend simultaneously in the circumferential and axial direction, describing a helix that is coaxial with the race 110.

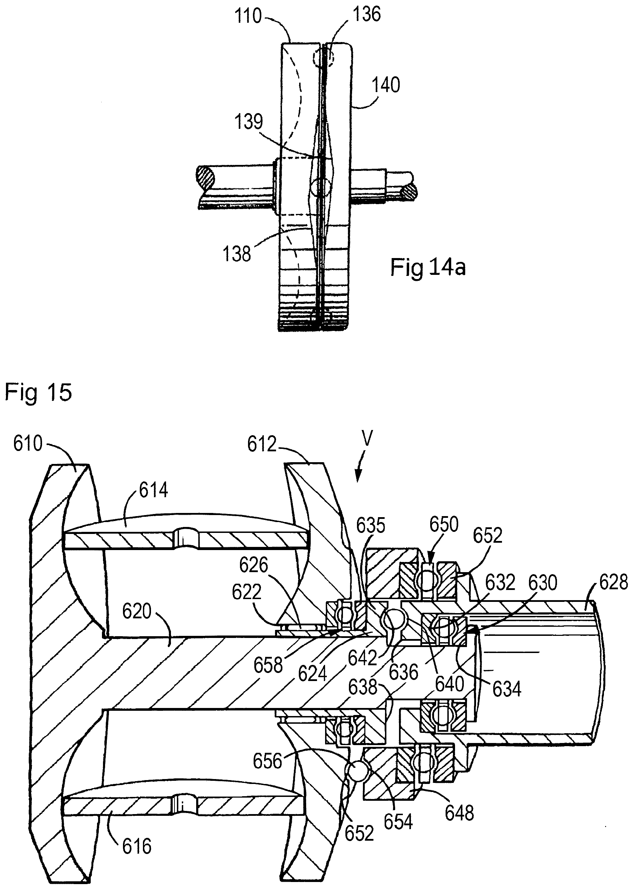

The variator according to the invention shown in FIG. 15 has a rolling element control mechanism (not shown) as described herein or as in any one of the variators illustrated in Figures 1 to 12 and represents an alternative preferred embodiment since the performance of the variator system will closely approximate a hydraulically controlled variator, albeit with lower cost and complexity. The variator comprises a variator V having a toroidally-recessed input disc 610 facing a toroidally-recessed output disc 612. Two rollers 614, 616 are rotatably mounted on roller carriages (not shown) in the toroidal cavity defined between the opposing toroidally-recessed working surfaces of the input and output discs 610, 612, to transmit drive from the input disc 610 to the output disc 612 with a ratio which is variable by tilting the rollers 614, 616. The drive is actually transmitted by a very thin layer of elasto-hydrodynamic fluid between the rollers 614, 616 and the input and output discs 610, 612. The significant characteristic of the elasto-hydrodynamic fluid is that it becomes highly viscous when pressure is applied to it, allowing torque to be transmitted between the input and output discs and the rollers.

The input disc 610 is mounted on an input disc drive shaft 620 which passes through an aperture 622 in the centre of the output disc 612. A sleeve 624 is splined to the input disc drive shaft and supports the output disc 612 on needle roller bearings 626.

The input disc drive shaft 620 is rotated by means of a hollow variator transmission input shaft 628, through the end of which the input disc drive shaft 620 passes. The transmission input shaft 628 is rotationally displaceable with respect to the input disc drive shaft by means of a thrust bearing 630 mounted between an annular end wall 632 of the hollow variator input shaft and an enlarged head portion 634 of the input disc drive shaft 620.

The outer face 636 of the annular end wall 632 of the hollow variator transmission input shaft 628 and the end face 638 of a shoulder portion 635 of the splined sleeve 624 are provided with three ramped grooves 640, 642 which receive a plurality of spherical balls 644. As the hollow variator transmission input shaft 628 turns slightly with respect to the input disc drive shaft 620, the balls 644 move along the ramped grooves 640, 642, thereby applying to the output disc 612 a first end load, proportional to the input torque applied to the variator by the transmission input shaft 628. The first end load is applied to the outer face of the output disc 612 via a thrust bearing 658 between the outer face of the output disc and the shoulder portion 635 of the splined sleeve 624.

An annular variator output gear 648 is rotatably mounted with respect to the hollow variator transmission input shaft 628 by means of a further thrust bearing 650, which also bears against a radially-extending flange 652 on the exterior surface of the transmission input shaft 628. The longitudinally outer face of the output disc 612 and the opposed face of the annular variator output gear 648 are similarly provided with three ramped grooves 652, 654 which each receive a ball 656, whereby rotation of the output disc 612 is transferred to the annular output gear 648.

At the same time, the action of the ball and ramp arrangement 652, 654, 656 applies to the output disc 612 a further end load which is proportional to the output torque of the variator.

Therefore, two independent end load components, one proportional to the input torque and one proportional to the output torque, are applied to the same disc, namely the output disc 612. In this way, the end load applied to the variator is proportional to a sum of the input and output torques and thus an accurate end load is provided mechanically, without the requirement for a high pressure hydraulic system.

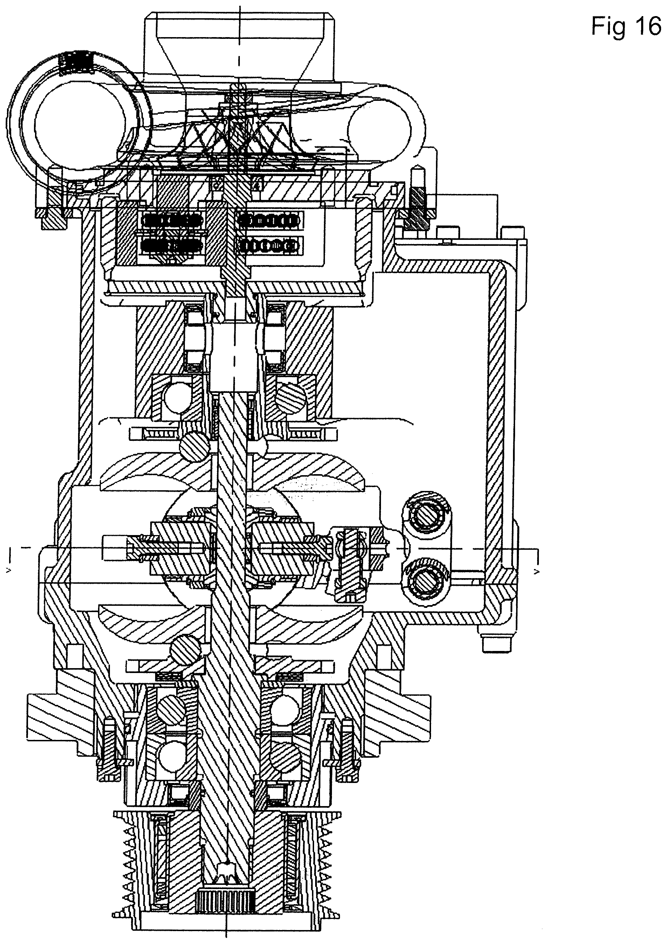

Figure 16 shows an embodiment of a "maximum wins" end load system comprising a cam arrangement with an input and an output end load mechanism in combination with a low power variator rolling element control mechanism of the present invention as employed in the claimed supercharger arrangement. This advantageously provides a low cost and effective variator system, suitable for use in main vehicle drives as well as auxiliary drives such as superchargers or kinetic energy recovery system drives utilising flywheels, as non-limiting examples.

The embodiments described above may include any of the following optional features, alone or in combination with any of the features and embodiments described above or with any feature in the claims below, subject to being within the scope of the claims:

- Each rolling element may be mounted on a gimbal on a carriage assembly for rotation about a rolling axis, which gimbal may provide a castor angle for the roller. The gimbal may comprise a pivoting joint whose axis passes through the centre of the rolling element. A reaction member may optionally be coupled to the gimbal such that the reaction loads are borne by the reaction member at the roller centre.

  - The control member may be adapted to provide actuation by rotational movement about the variator axis. It may be an annulus.
  - The actuation point may be offset from the centre plane of the toroidal cavity in a direction parallel to the variator axis.
  - The control member suitably does not bear load from the rolling elements.
  - Each carriage assembly may be actuated at an actuation point radially distant from the pitch axis such that the carriage undergoes pivotal movement about the pitch axis.
  - Each carriage assembly may comprise a stem coupled to the control member. The stem may lie in the centre plane of the variator.
  - The or each rolling element and its respective carriage assembly together suitably has four points of contact, the points of contact being at the input surface, the output surface, an actuation point and a reaction point.
  - The control member may be adapted to provide actuation by translational movement.
  - The variator may include a reaction member. The reaction member may have one or more of the following features alone or in combination:

    ◦ The reaction member may be movable radially of the variator axis and optionally is movable in a non-radial direction such that that the reaction member balances reaction loads generated by each rolling element within the toroidal cavity.

◦ The reaction member may be moveable along a linear guide.

◦ The reaction member may comprise a mechanical end-stop to limit movement of the reaction member in a radial direction relative to the variator axis.

◦ The or each carriage may have radial float on the reaction member relative to the variator axis, such radial float being in a direction substantially perpendicular to the shear forces at the rolling element-race contacts, and perpendicular to the variator axis. Where there is a spherical joint at the centre of the roller, preferably the outer portion of the spherical joint is fixed with respect to the carriage such that, even with said radial movement, carriage reaction forces do not create a pitching couple on the rolling element.

◦ The reaction member may have float in the direction of the variator axis.

◦ The reaction member may be mounted for rotation about the variator axis in response to reaction torque arising from the disc to rolling element contacts.

◦ Rotation of the reaction member may cause a change in variator ratio.

- Movement of the or each carriage about the pitch axis is suitably caused by one or more components of the variator moving other than in rotation about the pitch axis.
- The variator may further comprise:

a second input surface and a second output surface that faces the second input surface to define a second toroidal cavity;

a second plurality of rolling elements disposed between the second input and second output surfaces and being in driving engagement with the second input and second output surfaces at respective contact regions, each rolling element being mounted on a carriage assembly for rotation about a rolling axis, each rolling element being free to pivot about a tilt axis, the tilt axis passing through the rolling element perpendicular to the rolling axis, and intersecting the rolling axis at a roller centre, whereby a change in the variator ratio being the ratio of rotational speeds of the races occurs with a change in tilt angle; wherein each carriage assembly is mounted for pivotal movement about a pitch axis that results in a change of a pitch angle of the rolling element, the pitch axis passing through the roller centre and through the contact regions; and ;

the said control member or a second control member for actuation of the each second carriage assembly to pitch the second plurality of rolling elements resulting in a change in pitch angle and a change in the variator ratio.

◦ Such a variator may comprise a reaction member operatively coupled to the plurality of rolling elements in the first cavity and a second reaction member operatively coupled to the second plurality of rolling elements in the second cavity such that the second reaction member bears the reaction load arising from the respective rolling elements in the second cavity; and a load-sharing assembly operatively linked to the reaction members of the first and second cavities such that reaction torque from the reaction members is balanced.

**Claims**

1. A supercharging arrangement for an internal combustion engine comprising:

a supercharger having a rotational drive input, a transmission having a rotational drive input to receive drive from an internal combustion engine, a rotational drive output connected to the input of the supercharger, and a variator, operatively connected between the input and the output of the transmission, the variator comprising:

an input race (10, 512, 514) and an output race (14, 520, 522) each having a working surface, the races being coaxially mounted for rotation about a variator axis (V), and a toroidal cavity being defined between the working surfaces;

at least one rolling element (20, 22, 534, 536) disposed between the working surfaces, the or each rolling element (20, 22, 534, 536) having one first rolling contact with one working surface and a second rolling contact, these two contacts defining a pitch axis, the or each rolling element (20, 22, 534, 536) being mounted on a carriage assembly (24, 26) for rotation about a rolling axis, the radius of the first rolling contact with the one working surface being variable with respect to the variator axis in accordance with the ratio of the variator, the or each rolling element being mounted for pivotal movement about the pitch axis;

a control member (40) operative to actuate the or each rolling element to cause pivotal movement and thereby change the pitch angle, and thereby cause the carriage assembly to pivot about a tilt axis to effect a change in variator ratio; and

a mechanical end-load system (548, 592, 594, 642, 644) which applies an axial end-load force to the rolling elements directly related to torque transmitted through the variator, **characterized by** the supercharging arrangement further comprising a cooling pump adapted to deliver cooling fluid to the variator rolling elements, wherein the said cooling pump is driven by an electric motor.

2. A supercharging arrangement according to claim 1 in which the second rolling contact of the or each rolling element is in contact with the other of the working surfaces.

3. A supercharging arrangement according to claim 1 or 2 in which the input race is operatively coupled to a variator input and the output race is suitably operatively coupled to a variator output, and in which the end-load system includes one or more end load biasing devices (548, 592, 594, 642, 644) that couple either or both of the input race (10, 512, 514) and the output race (14, 520, 522) respectively to either or both of the variator input (531) and the variator output (590).

4. A supercharging arrangement according to claim 3 wherein each biasing device is configured to transmit torque through one or more links (598, 578, 644) to the or each race (10, 14, 512, 514, 520, 522).

5. A supercharging arrangement according to claim 3 or 4 in which the or each biasing device serves to transmit torque from the variator input through a link (598, 578, 644) to the input race or from the output race through a link to the variator output, and is operative to apply to the associated race an end load force that is related to the torque that it is transmitting.

6. A supercharging arrangement according to any one of claims 3 to 5 in which the end-load clamping system is operative to apply an end load that is determined only by the torque on the input race (10, 512, 514).

7. A supercharging arrangement according to any one of claims 3 to 5 in which the end-load clamping system is operative to apply an end load that is determined only by the torque on the output race (14, 520, 522).

8. A supercharging arrangement according to any one of claims 3 to 5 in which the end-load clamping system is operative to apply an end load that is determined by the torques on both races (10, 14, 512, 514, 520, 522).

9. A supercharging arrangement according to any one of claims 3 to 5 and 8 in which the end load depends upon the greater of the input torque and the output torque.

10. A supercharging arrangement according to claim 9 in which the coupling of the input race (10, 512, 514) to the variator input (531) is through a first biasing device (592) which serves to transmit torque from one to the other and is arranged to exert upon the input race (10,512,514) a first biasing force which varies with torque acting on the variator input (531), and in that coupling of the output race to the variator output is through a second biasing device (594) which serves to transmit torque from one to the other and is arranged to exert upon the output race (14, 520, 522) a second biasing force which varies with the torque acting on the variator output, the first and second biasing forces both being directed such as to urge the input (10, 512, 514) and output (14,520, 522) races into engagement with the rolling elements (20, 22, 534, 536), and acting in opposition so that at any moment one or other dominates and determines the net biasing force applied by the two biasing devices (592, 594).

11. A supercharging arrangement according to any one of the preceding claims in which the or each rolling element (20, 22, 534, 536) and its respective carriage assembly (24, 26) together have four points of contact, the points of contact being at the input surface, the output surface, an actuation point and a reaction point such that the rolling element is constrained in its position in the toroidal cavity.

12. A supercharging arrangement according to any preceding claim in which the toroidal cavity contains not more than two rolling elements (20, 22, 534, 536).

13. A supercharging arrangement according to any preceding claim comprising a reaction member operatively coupled to the or each rolling element (20, 22, 534, 536) such that it bears the reaction torque from the rolling elements within the toroidal cavity.

14. A supercharging arrangement according to any of the preceding claims wherein the mechanical end load clamping system comprises a biasing device (592, 594) applied to the input race (10, 512, 514) or to the output race (14, 520, 522) or two biasing devices (592, 594), each applied to one of the input race (10, 512, 514) and the output race (14, 520, 522) which serves to transmit torque from one race to the other and is arranged to exert upon the race to which it is applied a biasing force which varies with torque acting on respectively, the variator input or the variator output or both the input and/or output biasing forces being directed such as to urge the input and output races into engagement with the rolling elements to allow transfer of drive between them.

15. A supercharging arrangement according to any one of the preceding claims in which the transmission includes a traction drive epicyclic gearset in which the epicyclic gearset shares traction fluid with the variator.

**Patentansprüche**

1. Aufladeanordnung für einen Verbrennungsmotor, umfassend:

einen Auflader, der einen Drehantriebseingang aufweist,
ein Getriebe, das einen Drehantriebseingang, um einen Antrieb von einem Verbrennungsmotor zu erhalten, einen Drehantriebsausgang, der mit dem Eingang des Aufladers verbunden ist, und einen Variator, der funktionsfähig zwischen dem Eingang und dem Ausgang des Getriebes verbunden ist, aufweist, der Variator umfassend:

einen Eingangslaufring (10, 512, 514) und einen Ausgangslaufring (14, 520, 522), die jeweils eine Betriebsfläche aufweisen, wobei die Laufringe zur Drehung um eine Variatorachse (V) koaxial montiert sind und ein ringförmiger Hohlraum zwischen den Betriebsflächen definiert ist;
mindestens einen Wälzkörper (20, 22, 534, 536), der zwischen den Arbeitsflächen angeordnet ist, wobei der oder jeder Wälzkörper (20, 22, 534, 536) einen ersten Wälzkontakt mit einer Betriebsfläche und einen zweiten Wälzkontakt aufweist, wobei diese zwei Kontakte eine Neigungsachse definieren, wobei der oder jeder Wälzkörper (20, 22, 534, 536) auf einer Schlittenbaugruppe (24, 26) zur Drehung um eine Wälzachse montiert ist, wobei der Radius des ersten Wälzkontakts mit der einen Betriebsfläche in Bezug auf die Variatorachse gemäß dem Verhältnis des Variators variabel ist, wobei der oder jeder Wälzkörper für eine Schwenkbewegung um die Neigungsachse montiert ist;
ein Steuerelement (40), das betrieben werden kann, um den oder jeden Wälzkörper zu betätigen, um eine Schwenkbewegung zu bewirken und dadurch den Neigungswinkel zu ändern und dadurch zu bewirken, dass die Schlittenbaugruppe um eine Kippachse schwenkt, um eine Änderung des Variatorverhältnisses zu bewirken; und
ein mechanisches Endlastsystem (548, 592, 594, 642, 644), das eine axiale Endlastkraft auf die Wälzkörper anwendet, die in direkter Beziehung zu dem Drehmoment steht, das durch den Variator übertragen wird, **dadurch gekennzeichnet, dass** die Aufladeanordnung ferner eine Kühlpumpe aufweist, die angepasst ist, um Kühlfluid zu den Variator-Wälzkörpern zuzuführen, wobei die Kühlpumpe von einem Elektromotor angetrieben wird.

2. Aufladeanordnung nach Anspruch 1, bei der der zweite Wälzkontakt des oder jedes Wälzkörpers in Kontakt mit der anderen der Betriebsflächen ist.

3. Aufladeanordnung nach Anspruch 1 oder 2, bei der der Eingangslaufring funktionsfähig mit einem Variatoreingang gekoppelt ist und der Ausgangslaufring auf geeignete Weise funktionsfähig mit einem Variatorausgang gekoppelt ist, und bei der das Endlastsystem eine oder mehrere Endlastvorspannvorrichtungen (548, 592, 594, 642, 644) beinhaltet, die einen oder beide von dem Eingangslaufring (10, 512, 514) und/oder dem Ausgangslaufring (14, 520, 522) mit einem oder beiden von dem Variatoreingang (531) und/oder dem Variatorausgang (590) koppeln.

4. Aufladeanordnung nach Anspruch 3, bei der jede Vorspannvorrichtung konfiguriert ist, um ein Drehmoment über eine oder mehrere Verbindungen (598, 578, 644) zu dem oder jedem Laufring (10, 14, 512, 514, 520, 522) zu übertragen.

5. Aufladeanordnung nach Anspruch 3 oder 4, bei der die oder jede Vorspannvorrichtung dazu dient, ein Drehmoment von dem Variatoreingang über eine Verbindung (598, 578, 644) auf den Eingangslaufring oder vom Ausgangslaufring über eine Verbindung auf den Variatorausgang zu übertragen, und funktionsfähig ist, um auf den assoziierten Laufring eine Endlastkraft anzuwenden, die mit dem Drehmoment in Beziehung steht, das von ihm übertragen wird.

6. Aufladeanordnung nach einem der Ansprüche 3 bis 5, bei der das Endlastklemmsystem funktionsfähig ist, um eine Endlast anzuwenden, die nur durch das Drehmoment an dem Eingangslaufring (10, 512, 514) bestimmt ist.

7. Aufladeanordnung nach einem der Ansprüche 3 bis 5, bei der das Endlastklemmsystem funktionsfähig ist, eine Endlast anzuwenden, die nur durch das Drehmoment an dem Ausgangslaufring (14, 520, 522) bestimmt ist.

8. Aufladeanordnung nach einem der Ansprüche 3 bis 5, bei der das Endlastklemmsystem funktionsfähig ist, um eine Endlast anzuwenden, die durch die Drehmomente an beiden Laufringen (10, 14, 512, 514, 520, 522) bestimmt ist.

9. Aufladeanordnung nach einem der Ansprüche 3 bis 5 und 8, bei der die Endlast von dem größeren des Eingangsdrehmoments und Ausgangsdrehmoments abhängt.

10. Aufladeanordnung nach Anspruch 9, bei der das Koppeln des Eingangslaufrings (10, 512, 514) mit dem Variatoreingang (531) durch eine erste Vorspannvorrichtung (592) erfolgt, was dazu dient, ein Drehmoment von dem einen auf den anderen zu übertragen, angeordnet ist, um auf den Eingangslaufring (10, 512, 514) eine erste Vorspannkraft auszuüben, die mit dem Drehmoment variiert, das auf den Variatoreingang (531) wirkt, und dadurch, dass ein Koppeln des Ausgangslaufrings mit dem Variatorausgang über eine zweite Vorspannvorrichtung (594) erfolgt, die dazu dient, ein Drehmoment von dem einen auf den anderen zu übertragen, und angeordnet ist, um auf den Ausgangslaufring (14, 520, 522) eine zweite Vorspannkraft auszuüben, die mit dem Drehmoment variiert, das auf den Variatorausgang wirkt, wobei die erste und die zweite Vorspannkraft beide gerichtet sind, um den Eingangslaufring (10, 512, 514) und den Ausgangslaufring (14, 520, 522) in Eingriff mit den Wälzkörpern (20, 22, 534, 536) zu zwingen und entgegengesetzt zu wirken, sodass zu jedem Zeitpunkt der eine oder der andere dominiert und die von den zwei Vorspannvorrichtungen (592, 594) angewendete Nettovorspannkraft bestimmt.

11. Aufladeanordnung nach einem der vorherigen Ansprüche, bei der der oder jeder Wälzkörper (20, 22, 534, 536) und seine jeweilige Schlittenbaugruppe (24, 26) zusammen vier Kontaktpunkte aufweisen, wobei die Kontaktpunkte an der Eingangsfläche, der Ausgangsfläche, einem Betätigungspunkt und einem Reaktionspunkt sind, sodass der Wälzkörper in seiner Position in dem ringförmigen Hohlraum eingeschränkt ist.

12. Aufladeanordnung nach einem vorhergehenden Anspruch, bei der der ringförmige Hohlraum nicht mehr als zwei Wälzkörper (20, 22, 534, 536) enthält.

13. Aufladeanordnung nach einem vorhergehenden Anspruch, umfassend ein Reaktionselement, das funktionsfähig mit dem oder jedem Wälzkörper (20, 22, 534, 536) gekoppelt ist, sodass es das Reaktionsdrehmoment von den Wälzkörpern innerhalb des ringförmigen Hohlraums trägt.

14. Aufladeanordnung nach einem der vorherigen Ansprüche, wobei das mechanische Endlastklemmsystem eine Vorspannvorrichtung (592, 594), die auf den Eingangslaufring (10, 512, 514) oder den Ausgangslaufring (14, 520, 522) wirkt, oder zwei Vorspannvorrichtungen (592, 594), die jeweils auf einen von dem Eingangslaufring (10, 512, 514) oder dem Ausgangslaufring (14, 520, 522) wirken, umfasst, was dazu dient, ein Drehmoment von einem Laufring auf den anderen zu übertragen, und das angeordnet ist, um auf den Laufring, auf den es angewendet ist, eine Vorspannkraft auszuüben, die mit dem Drehmoment variiert, das jeweils auf den Variatoreingang oder den Variatorausgang oder auf beide wirkt, wobei die Eingangs- und/oder Ausgangsvorspannkräfte gerichtet sind, den Eingangs- und den Ausgangslaufring in Eingriff mit den Wälzkörpern zu zwingen, um eine Antriebsübertragung zwischen ihnen zu ermöglichen.

15. Aufladeanordnung nach einem der vorherigen Ansprüche, bei der das Getriebe ein Traktionsantrieb-Planetengetriebe beinhaltet, bei dem sich das Planetengetriebe Traktionsfluid mit dem Variator teilt.

## Revendications

1. Agencement de suralimentation pour moteur à combustion interne comprenant : un compresseur de suralimentation possédant une entrée d'entraînement en rotation,
une transmission possédant une entrée d'entraînement en rotation pour recevoir l'entraînement provenant d'un moteur à combustion interne, une sortie d'entraînement en rotation raccordée à l'entrée du compresseur de suralimentation, et un variateur, raccordé fonctionnellement entre l'entrée et la sortie de la transmission, le variateur comprenant :

un chemin d'entrée (10, 512, 514) et un chemin de sortie (14, 520, 522) possédant chacun une surface de travail, les chemins étant montés coaxialement pour tourner autour d'un axe (V) de variateur, et une cavité toroïdale étant définie entre le surfaces de travail ;
au moins un élément roulant (20, 22, 534, 536) disposé entre les surfaces de travail, le ou chaque élément roulant (20, 22, 534, 536) possédant un premier contact de roulement avec une surface de travail et un second contact roulant, ces deux contacts définissant un axe de tangage, le ou chaque élément roulant (20, 22, 534, 536) étant monté sur un ensemble chariot (24, 26) destiné à tourner autour d'un axe de roulement, le rayon du premier contact roulant avec la surface de travail étant variable par rapport à l'axe de variateur selon le rapport du variateur, le ou chaque élément roulant étant monté pour un mouvement de pivotement autour de l'axe de tangage ;

un élément de commande (40) servant à actionner le ou chaque élément roulant pour entraîner un mouvement de pivotement et ainsi changer l'angle de tangage, et ainsi amener l'ensemble chariot à pivoter autour d'un axe d'inclinaison pour effectuer un changement du rapport de variateur ; et un système de charge d'extrémité mécanique (548, 592, 594, 642, 644) qui applique une force axiale de charge d'extrémité aux éléments roulants directement liée au couple transmis à travers le variateur, **caractérisé par** l'agencement de suralimentation comprenant en outre une pompe de refroidissement adaptée pour délivrer un fluide de refroidissement aux éléments roulants du variateur, ladite pompe de refroidissement étant entraînée par un moteur électrique.

2. Agencement de suralimentation selon la revendication 1, ledit second contact roulant du ou de chaque élément roulant étant en contact avec l'autre des surfaces de travail.

3. Agencement de suralimentation selon la revendication 1 ou 2, ledit chemin d'entrée étant couplé de manière fonctionnelle à une entrée de variateur et ledit chemin de sortie étant couplé de manière fonctionnelle et appropriée à une sortie de variateur et ledit système de charge d' extrémité comprenant un ou plusieurs dispositifs de sollicitation de charge d'extrémité (548, 592, 594, 642, 644) qui couplent le chemin d'entrée (10, 512, 514) et/ou le chemin de sortie (14, 520, 522) respectivement à l'entrée de variateur (531) et/ou la sortie de variateur (590).

4. Agencement de suralimentation selon la revendication 3, chaque dispositif de sollicitation étant conçu pour transmettre un couple par l'intermédiaire d'une ou de plusieurs liaisons (598, 578, 644) au ou à chaque chemin (10, 14, 512, 514, 520, 522).

5. Agencement de suralimentation selon la revendication 3 ou 4, ledit ou chaque dispositif de sollicitation servant à transmettre le couple de l'entrée de variateur par l'intermédiaire d'une liaison (598, 578, 644) au chemin d'entrée ou du chemin de sortie par l'intermédiaire d'une liaison à la sortie de variateur, et servant à appliquer au chemin associé une force de charge d'extrémité qui est liée au couple qu'il transmet.

6. Agencement de suralimentation selon l'une quelconque des revendications 3 à 5, ledit système de serrage de charge d'extrémité servant à appliquer une charge d'extrémité qui est déterminée uniquement par le couple sur le chemin d'entrée (10, 512, 514).

7. Agencement de suralimentation selon l'une quelconque des revendications 3 à 5, ledit système de serrage de charge d'extrémité servant à appliquer une charge d'extrémité qui est déterminée uniquement par le couple sur le chemin de sortie (14, 520, 522).

8. Agencement de suralimentation selon l'une quelconque des revendications 3 à 5, ledit système de serrage de charge d'extrémité servant à appliquer une charge d'extrémité qui est déterminée par les couples sur les deux chemins (10, 14, 512, 514, 520, 522).

9. Agencement de suralimentation selon l'une quelconque des revendications 3 à 5 et 8, ladite charge d'extrémité dépendant du plus élevé du couple d'entrée et du couple de sortie.

10. Agencement de suralimentation selon la revendication 9, ledit couplage du chemin d'entrée (10, 512, 514) à l'entrée de variateur (531) étant effectué par l'intermédiaire d'un premier dispositif de sollicitation (592) qui sert à transmettre le couple de l'un à l'autre et étant agencé pour exercer sur le chemin d'entrée (10, 512, 514) une première force de sollicitation qui varie avec le couple agissant sur l'entrée de variateur (531), et en ce que le couplage du chemin de sortie à la sortie de variateur est effectué par l'intermédiaire du second dispositif de sollicitation (594) qui sert à transmettre le couple de l'un à l'autre et est agencé pour exercer sur le chemin de sortie (14, 520, 522) une seconde force de sollicitation qui varie avec le couple agissant sur la sortie de variateur, les première et seconde forces de sollicitation étant dirigées de façon à amener les chemins d'entrée (10, 512, 514) et de sortie (14, 520, 522) en prise avec les éléments roulants (20, 22, 534, 536), et agissant en opposition afin qu'à tout moment l'une ou l'autre domine et détermine la force de sollicitation nette appliquée par les deux dispositifs de sollicitation (592, 594).

11. Agencement de suralimentation selon l'une quelconque des revendications précédentes, ledit ou chaque élément roulant (20, 22, 534, 536) et son ensemble chariot respectif (24, 26) possédant ensemble quatre points de contact, les points de contact étant au niveau de la surface d'entrée, de la surface de sortie, d'un point d'actionnement et d'un point de réaction de sorte que l'élément roulant soit contraint dans sa position dans la cavité toroïdale.

12. Agencement de suralimentation selon l'une quelconque des revendications précédentes, ladite cavité toroïdale ne contenant pas plus de deux éléments roulants (20, 22, 534, 536).

13. Agencement de suralimentation selon l'une quelconque des revendications précédentes, comprenant un élément de réaction couplé fonctionnellement au ou à chaque élément roulant (20, 22, 534, 536) de sorte qu'il supporte le couple de réaction provenant des éléments roulants à l'intérieur de la cavité toroïdale.

14. Agencement de suralimentation selon l'une quelconque des revendications précédentes, ledit système de serrage de charge d'extrémité mécanique comprenant un dispositif de sollicitation (592, 594) appliqué au chemin d'entrée (10, 512, 514) ou au chemin de sortie (14, 520, 522) ou deux dispositifs de sollicitation (592, 594), chacun appliqué à l'un du chemin d'entrée (10, 512, 514) et du chemin de sortie (14, 520, 522) qui sert à transmettre le couple d'un chemin à l'autre et étant agencé pour exercer sur le chemin auquel il est appliqué une force de sollicitation qui varie avec le couple agissant respectivement, sur l'entrée de variateur ou sur la sortie de variateur ou les deux, les forces de sollicitation d'entrée et/ou de sortie étant dirigées de sorte que les chemins d'entrée et de sortie soient amener en prise avec les éléments roulants pour permettre le transfert d'entraînement entre eux.

15. Agencement de suralimentation selon l'une quelconque des revendications précédentes, ladite transmission comprenant un train d'engrenages épicycloïdal d'entraînement de traction, ledit train d'engrenages épicycloïdal partageant le fluide de traction avec le variateur.

Fig 1

Fig 2

EP 3 074 662 B1

40

48

44

42

46

C

Fig 3

42

44

48

24

30

28

10

52

50

26

A

B'

V 34

14

1a

0

0

V

1a

A
B

B

22

Fig 4

P

22

Fig 5

Fig 6

23

EP 3 074 662 B1

Fig 7

24

Fig 8

Fig 9

Fig 10

Fig 11

Fig 12

Fig 13

Fig 14

Fig 14a

Fig 15

Fig 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010070341 A
- WO 2013104727 A
- GB 2499704 A